# EUROPÄISCHE PATENTSCHRIFT

(11) **EP 3 620 257 B1**
(45) Veröffentlichungstag und Bekanntmachung des Hinweises auf die Patenterteilung: **18.11.2026**
(21) Anmeldenummer: 19190546.2
(22) Anmeldetag: 07.08.2019
(51) Int. Cl.: B23K 37/04, B29C 65/78, B29C 65/00

(54) **SCHWEISSANLAGEN-POSITIONIER-ANORDNUNG**
WELDING DEVICE POSITIONING ARRANGEMENT
DISPOSITIF DE POSITIONNEMENT D'INSTALLATION DE SOUDAGE

(30) Priorität: 13.08.2018 DE 102018119641
(43) Veröffentlichungstag der Anmeldung: 11.03.2020
(73) Patentinhaber: Branson Ultraschall Niederlassung der Emerson Technologies GmbH & Co. OHG, 63128 Dietzenbach (DE)
(72) Erfinder: Priem, Heiko, 63636 Brachttal (DE)
(74) Vertreter: Heyer, Volker

(56) Entgegenhaltungen:
- DE-T2- 69 605 337
- DE-T2- 69 709 440
- JP-A- 2016 087 666
- US-A- 5 780 943

## Beschreibung

### 1. Gebiet der Erfindung

Die vorliegende Erfindung betrifft eine Schweißanlagen-Positionier-Anordnung mit der bei Verwendung in einer Schweißanlage ein erstes Bauteil gegen ein zweites Bauteil mit einer Kraft drückbar ist, eine Schweißanlage mit dieser Schweißanlagen-Positionier-Anordnung, ein entsprechendes Schweißverfahren sowie einen Nachrüstsatz für eine Schweißanlage und ein entsprechendes Nachrüstverfahren.

### 2. Hintergrund der Erfindung

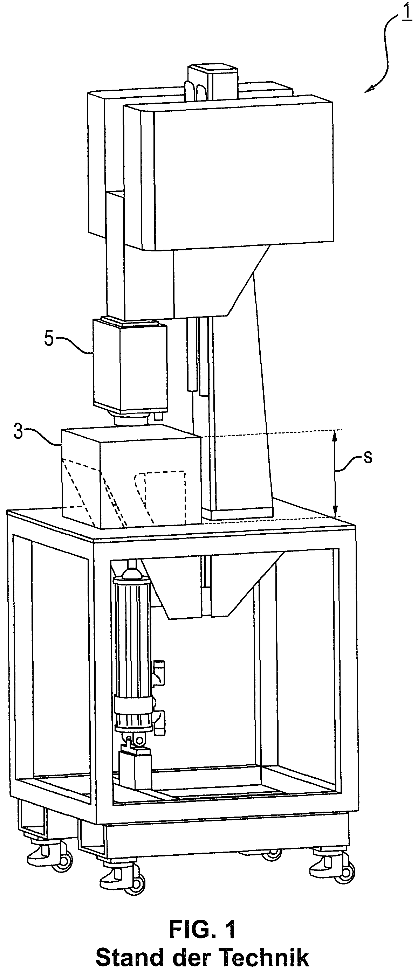

Beim Verschweißen von zwei Bauteilen miteinander werden beispielsweise Schweißanlagen verwendet, die einen Hubtisch aufweisen. Figur 1 zeigt eine entsprechende Ausführungsform einer entsprechenden Schweißanlage 1. Die miteinander zu verschweißenden Bauteile werden auf dem Hubtisch 3 positioniert und der Hubtisch 3 wird entlang der vertikalen Richtung verfahren. Dadurch werden die beiden Bauteile zwischen dem Hubtisch 3 und einem Oberwerkzeug 5 der Schweißanlage 1 mit einer Kraft eingeklemmt. Aktuelle Schweißanlagen insbesondere für kleine Kräfte und somit für kleine Anwendungen, d.h. kleine zu verschweißende Bauteile, sind Ultraschall- oder Laserschweißpressen, die eine Linearführung aufweisen und pneumatisch oder elektrisch angetrieben werden.

Die dazugehörigen Hubtischsystemen weisen Reibungsverluste auf, die aufgrund der verwendeten Mechanik wie Linearführungen, Motoren, Hydrauliken mit Zylindern, Lagern und weiteren am kraftaufbringenden System beteiligten Komponenten auftreten. Diese Reibungsverluste führen zur Ausbildung von Hysteresen in einer Kraftregelung der Schweißanlage. Die über den Hubtisch aufgebrachte Kraft zeigt dabei Pfadabhängigkeit. Dies bedeutet, dass die genaue Stärke der Wirkung nicht nur von der verursachenden Größe, also der vorgegebenen Soll-Kraft, abhängt, sondern auch von der Vorgeschichte der Verstell-Komponenten des Hubtischs. Typisch für ein Hysterese-Verhalten ist das Auftreten einer Hysterese-Schleife. Diese entsteht, indem die verursachende Größe zwischen zwei verschiedenen Werten hin und her bewegt wird. Der Hubtisch kann also - abhängig von der Vorgeschichte - bei gleicher Eingangsgröße eine von mehreren möglichen Positionen einnehmen.

Weiterhin können die Reibungsverluste zum sogenannten Stick-Slip-Effekt führen. Dieser Effekt wird auch als Haftgleiteffekt bezeichnet und charakterisiert das Ruckgleiten von gegeneinander bewegten Festkörpern. Er kann auftreten, wenn die Haftreibung merklich größer ist als die Gleitreibung. Dabei üben gedämpft gekoppelte Oberflächenteile eine schnelle Bewegungsfolge aus: Haften, Verspannen, Trennen und Abgleiten. Dieser Effekt ist in technischen Anwendungen häufig unerwünscht. Er erzeugt Lärm und Körperschall, der oft als unangenehm wahrgenommen wird und zu erhöhtem Verschleiß und Materialermüdung führen kann. Außerdem kann er die Durchführung kleinster Bewegungen beispielsweise bei Präzisionswerkzeugmaschinen vollständig unterbinden.

Die Grenzen der bekannten Schweißanlagen liegen somit in der Regelung geringer Kräfte, was eine geringe Reibung oder geringe Verluste in der Schweißanlage und insbesondere im VerstellSystem des Hubtischs erfordert, wobei mindestens ein lineares Verhalten erforderlich ist. Die vorhandenen Führungen erzeugen dabei Reibung und erfahrungsgemäß haben die vorhandenen Führungen gerade in diesem geringen Kraftbereich, der zum Verschweißen filigraner Bauteile, wie beispielsweise Folien von In-Ohr-Kopfhörern erforderlich ist, eine Hysterese. Dabei sind Hysteresen von +/-5 N bis +/-30 N keine Seltenheit. Auch alle Antriebe wie Pneumatikzylinder, Hydraulikzylinder oder Elektromotor mit Spindel haben Verluste und Reibung. Ebenso entstehen Verluste und Reibung bei der Umwandlung einer rotativen Bewegung in eine lineare Bewegung.

Im Hinblick auf Schweißanlagen führen diese Effekte daher besonders bei kleinen Kräften, die zum Schweißen filigraner Teile wie zum Beispiel Folien für In-Ohr-Kopfhörer benötigt werden, zu nicht reproduzierbaren Schweißergebnissen und machen diese Bauteile somit überhaupt nicht schweißbar. Da die Reibungsverluste und die Hysterese bei der Kontakterkennung zu großen Kraftspitzen führen können, kann dies bei kleinen Anwendungen ebenso zu einer Bauteilzerstörung führen.

JP 2016-087666 A beschäftigt sich mit dem Problem der Bereitstellung einer Ultraschallverbindungsmethode, mit der die Möglichkeit verringert werden kann, dass nach der Fertigstellung des Produkts eine beschädigte Stelle in einem Produkt zurückbleibt. Zur Lösung wird ein Ultraschall-Fügeverfahren zum Verbinden eines zu verbindenden Elements durch eine Ultraschall-Fügevorrichtung mit einem Amboss und mehreren Hörnern bereitgestellt, und das zu verbindende Element wird zwischen dem Amboss und den mehreren Hörnern gehalten durch das Aufbringen von Druck über die Vielzahl von Hörnern auf das Element, das durch den Amboss getragen wird. Nachdem das Element zwischen dem Amboss und den mehreren Hörnern gehalten wurde, wird das eine Horn von den mehreren Hörnern durch eine Ultraschallwelle in Schwingungen versetzt, und das Element wird verbunden. Nach dem Zusammenfügen durch Ultraschallvibration des einen Horns wird das andere Horn von den mehreren Hörnern durch die Ultraschallwelle in Vibration versetzt, und das zu verbindende Element wird verbunden.

Ein Positionierungssystem zum Bewegen einer Haltefläche, auf welcher ein Substrat relativ zu einer Grundplatte gehalten wird, ist in DE 696 05 337 T2 beschrieben. Das System weist die folgenden Elemente auf: mehrere berührungslose statische Lager zum Führen der Haltefläche, welche mit den Bewegungen in Richtung der Achsen X, Y und Z und in Drehrichtung um die Achsen X, Y und Z entsprechend verbunden sind, und mehrere Linearmotoren zum Bewegen der Haltefläche in Richtung der Achsen X, Y, und Z und in Drehrichtung um die Achsen X, Y und Z.

Aus DE 697 09 440 T2 ist eine Einrichtung zum Tragen eines Tisches bekannt, die folgendes aufweist: ein Führungsglied, welches eine Bühne und einen Tisch verbindet, wobei das Führungsglied eine Charakteristik positiver Starrheit in einer ersten Richtung besitzt; und ein Magnet zur Erzeugung einer Anziehungskraft, die im Wesentlichen dem Selbst- oder Eigengewicht des Tisches in einer Neutralposition entspricht und der eine Charakteristik negativer Starrheit besitzt, um ein Gegengewicht zu bilden für die Charakteristik der positiven Starrheit des Führungsglieds.

Schließlich ist eine Bühnenvorrichtung in US 5,780,943 A beschrieben. Diese verfügt über ein Paar Permanentmagnete, die an einem Magnethalter befestigt sind, und eine Spule, die an einem Spulenhalter befestigt und zwischen den Permanentmagneten positioniert ist. Wenn der Spule elektrischer Strom zugeführt wird, wird zwischen der Spule und dem oberen Permanentmagneten eine Anziehungskraft erzeugt, während zwischen der Spule und dem unteren Permanentmagneten eine Abstoßungskraft erzeugt wird, wodurch der Spulenhalter relativ zum Magnethalter in vertikaler Richtung bewegt wird. Wenn die Anziehungskraft und die Abstoßungskraft gleichzeitig auf die Spule wirken, weist die resultierende Kraft eine hohe Linearität in Bezug auf den elektrischen Strom auf, da die Anziehungskraft und die Abstoßungskraft die nichtlinearen Eigenschaften voneinander aufheben.

Die objektive technische Aufgabe der vorliegenden Erfindung ist daher, eine Schweißanlage bereitzustellen, mit der insbesondere kleine Bauteile mit einer hohen Genauigkeit positionierbar und verschweißbar sind, sodass im Vergleich zum Stand der Technik verringerte oder gar keine Kraftspitzen bei Aufbringen einer Kraft auf die zu verschweißen Bauteile auftreten.

### 3. Zusammenfassung der Erfindung

Die obige Aufgabe wird gelöst durch eine Schweißanlagen-Positionier-Anordnung gemäß dem unabhängigen Patentanspruch 1, eine Schweißanlage mit einer Schweißanlagen-Positionier-Anordnung gemäß dem unabhängigen Patentanspruch 9, einem Schweißverfahren gemäß dem unabhängigen Patentanspruch 13 sowie einen Nachrüstsatz für eine Schweißanlage gemäß dem unabhängigen Patentanspruch 18 und ein Nachrüstverfahren für eine Schweißanlage gemäß dem unabhängigen Patentanspruch 19. Vorteilhafte Ausführungsformen und Weiterentwicklungen ergeben sich aus der nachfolgenden Beschreibung, den Zeichnungen sowie den anhängigen Patentansprüchen.

Eine erste Alternative einer erfindungsgemäßen Schweißanlagen-Positionier-Anordnung mit der bei Verwendung in einer Schweißanlage ein erstes Bauteil gegen ein zweites Bauteil mit einer Kraft drückbar ist, umfasst: einen statischen ersten Abschnitt und einen relativ zum statischen ersten Abschnitt bewegbaren zweiten Abschnitt, wobei mit dem zweiten Abschnitt im Betrieb das erste Bauteil gegen das zweite Bauteil drückbar ist, mindestens ein Antriebssystem, das mit einem ersten Ende mit dem ersten Abschnitt und mit einem zweiten Ende mit dem zweiten Abschnitt verbunden ist, sowie mindestens ein elastisches Führungssystem mittels dem der erste Abschnitt und der zweite Abschnitt miteinander verbunden sind, wobei der erste Abschnitt und der zweite Abschnitt aufgrund des mindestens einen elastischen Führungssystems entlang nur einer Achse relativ zueinander bewegbar sind, so dass eine axiale Länge der Schweißanlagen-Positionier-Anordnung veränderbar ist, und das mindestens eine Antriebssystem umfasst einen Tauchspulenantrieb.

Die erste Alternative der erfindungsgemäßen Schweißanlagen-Positionier-Anordnung wird nun zur besseren Verständlichkeit im Rahmen der Verwendung in einer Schweißanlage im Betrieb erläutert. Bei der Schweißanlage selbst kann es sich um jede beliebige Schweißanlage handeln, wie beispielsweise eine Ultraschall-Schweißanlage, eine Laser-Schweißanlage, eine Infrarot-Schweißanlage, eine Vibrations-Schweißanlage oder eine Reib-Schweißanlage. Die Schweißanlage stellt ein Oberwerkzeug bereit und im Betrieb werden die zu verschweißenden Bauteile zwischen dem Oberwerkzeug und dem zweiten Abschnitt der Schweißanlagen-Positionier-Anordnung mit der gewünschten Kraft eingeklemmt.

Im Betrieb werden zunächst beide Bauteile auf dem zweiten Abschnitt angeordnet. Dann wird die axiale Länge der Anordnung mittels des Tauchspulenantriebs als Antriebssystem verändert, bis die beiden zu verschweißenden Bauteile mit der gewünschten Kraft zwischen dem zweiten Abschnitt und dem Oberwerkzeug eingeklemmt werden. In einer alternativen Vorgehensweise sind anfänglich das erstes Bauteil am Oberwerkzeug und das zweite Bauteil auf dem zweiten Abschnitt positionierbar.

Durch das elastische Führungssystem sind der erste und der zweite Abschnitt entlang nur einer Achse relativ zueinander bewegbar. Bei dieser Achse handelt es sich vorzugsweise um eine vertikale Achse, bezogen auf einen Boden, auf dem die Schweißanlage steht. Weiterhin weist das elastische Führungssystem keine mechanischen Verluste auf, arbeitet also verlustfrei. In diesem Zusammenhang bedeutet verlustfrei, dass vorzugweise keine Reibung oder bezogen auf die zum Verschweißen der beiden Bauteile gewünschte Kraft nur einen vernachlässigbar geringe Reibung zwischen den bewegbaren Komponenten des Führungssystems auftritt. Eine Auswahl der entsprechenden Ausgestaltungsmöglichkeiten des elastischen Führungssystems wird später unter Bezugnahme auf die bevorzugten Ausführungsformen diskutiert.

Aufgrund der Wahl des Tauchspulenantriebs oder Voice Coil Aktuators als Antriebssystem für die Schweißanlagen-Positionier-Anordnung, handelt es sich bei der Schweißanlagen-Positionier-Anordnung um eine Präzisions-Schweißanlagen-Positionier-Anordnung. Dies bedeutet, dass gerade die Durchführung kleinster Bewegungen und/oder das Aufbringen kleinster Kräfte mittels der Schweißanlagen-Positionier-Anordnung realisierbar sind. In anderen Worten handelt es sich bei der Schweißanlagen-Positionier-Anordnung um einen Mini-Hubtisch, insbesondere einen Präzisions-Mini-Hubtisch.

Begründet ist die Präzision der Schweißanlagen-Positionier-Anordnung darin, dass es sich bei einem Tauchspulenantrieb um einen hoch dynamischen Antrieb handelt, der keine mechanische Reibung aufweist. Insbesondere lassen sich diese Antriebe mit der entsprechenden Steuerung hochgenau positionieren und die Kraft ist ebenfalls hochgenau steuer- und/oder regelbar. Zudem sind sie aufgrund ihrer hohen Geschwindigkeit besonders für automatisierte Anlagen mit hoher Taktrate geeignet.

Im Hinblick auf die einstellbare axiale Länge hängt diese von der Dimensionierung des Tauchspulenantriebs ab, die auf die jeweilige Anwendung anpassbar ist. Üblicherweise lassen sich jedoch Amplituden und somit eine Änderung der axialen Länge zwischen 0,25-100 mm realisieren. Im Hinblick auf die aufbringbaren Kräfte können diese zwischen 0 N und 2 kN liegen. Eine Beschleunigung bis 300 m/s² und Geschwindigkeiten bis 5 m/s sind ebenfalls realisierbar. Wie bereits oben dargelegt zeichnet sich der Tauchspulenantrieb insbesondere durch die sehr hohe Positionier-Genauigkeit aus, die insbesondere bei +/- 0,1 µm liegt.

Der Motorstrom ist linear und kann zur Kraftregelung benutzt werden, sodass kein Kraftsensor erforderlich ist. Dies wird später unter Bezugnahme auf die erfindungsgemäße Schweißanlage ebenfalls erläutert.

Durch die Kombination eines reibungsarmen und genauen Antriebs, nämlich des Tauchspulenantriebs, zum Kraftaufbau und zur Einstellung der gewünschten axialen Länge sowie einer reibungsarmen Führung, nämlich des elastischen Führungssystems, werden jegliche Reibungsverluste in der Schweißanlagen-Positionier-Anordnung verhindert. Im Ergebnis werden daher alle Hysterese-Erscheinungen und Stick-Slip-Effekte vermieden.

Ein Vorteil der erfindungsgemäßen Anordnung ist daher, dass sich aufgrund der erzielbaren Genauigkeit die Schweißanlage mit der erfindungsgemäßen Schweißanlagen-Positionier-Anordnung auch für kleine Bauteile, wie beispielsweise zum Verschweißen von Folien für In-Ohr-Kopfhörer oder die Herstellung von Smartphones, genutzt werden können. Somit ist die Schweißen von filigranen und/oder hochempfindlichen, insbesondere elektronischen, Bauteilen mit sehr geringen Schweißkräften realisierbar. Ebenso ist eine hochgenaue Positionierung der Bauteile möglich sowie eine deutlich verbesserte Schweißtiefen-Regelung. Hohe Kraftspitzen bei einer Kontakterkennung zwischen den beiden Bauteilen werden reduziert und vorzugsweise völlig verhindert. Damit kann der Trigger-Punkt für den eigentlichen Schweißbeginn hochgenau gesteuert werden, was zu reproduzierbaren Schweißung führt und jegliche dadurch verursachte Bauteilzerstörung kann verhindert werden. Wie hoch der Präzisionsgrad der Schweißanlagen-Positionier-Anordnung ist, hängt nun nur noch von der Genauigkeit der verwendeten Steuerung und der dazugehörigen Sensoren ab.

In einer bevorzugten Ausführungsform weist die Schweißanlagen-Positionier-Anordnung mindestens drei Antriebssysteme auf. Mit einer Anordnung von zwei und mehr Antriebssystemen lassen sich in einem synchronisierten Betrieb unsymmetrische Lasten ausgleichen. Auf diese Weise kann entweder die Parallelität der beiden Abschnitte zueinander gewährleistet werden oder Kräfte können gleichmäßig auf die zu verschweißenden Flächen verteilt werden. Auch können Bauteiltoleranzen, die ein Kippen des Tisches erfordern, ausgeglichen werden.

In einer weiteren vorteilhaften Ausführungsform der Schweißanlagen-Positionier-Anordnung weist das mindestens eine Führungssystem mindestens eine Zentrierspinne oder eine Vielzahl an Federn auf. Durch diesen Aufbau wird weiter hervorgehoben, dass das elastische Führungssystem keine mechanische Reibung zwischen zwei zueinander relativ bewegten Komponenten der Schweißanlagen-Positionier-Anordnung aufweist. Neben der Zentrierspinne, wie sie aus Lautsprechern bekannt ist, sind alternativ auch Führungsscheiben, Membranen, Tellerführungen, mehrfach Linearfedern, o. ä. in gleicher Weise bevorzugt. Im Gegensatz zu herkömmlichen Führungen weist das elastische Führungssystem nur innere Reibung auf, aber keine mechanischen Verluste. Daher wird das elastische Führungssystem auch als verlustfrei bezeichnet. Insbesondere durch die Kombination des elastischen Führungssystems mit dem Antriebssystem sind sowohl der Abstand zwischen den beiden Abschnitten, also ein Hub- oder Verstell-Weg, wie auch eine später mit der Anordnung aufzubringende Kraft hoch genau steuer- und/oder regelbar.

Gemäß einer anderen bevorzugten Ausführungsform umfasst das mindestens eine Führungssystem eine erste Platte und eine zweite Platte, wobei die erste Platte und die zweite Platte an einem ersten axialen Ende miteinander verbunden sind, insbesondere über ein Abstandselement, und die erste Platte ist an einem zweiten axialen Ende mit dem ersten Abschnitt verbunden, während die zweite Platte an einem zweiten axialen Ende mit dem zweiten Abschnitt verbunden ist. Bei den beiden Platten handelt es sich beispielsweise um Blattfedern oder generell Federplatten. Aufgrund dieser Anordnung lassen die Platten nur eine Bewegungsrichtung, insbesondere entlang der vertikalen Achse, zu und dienen somit als Führung für alle anderen Richtungen. Vorzugsweise lassen die Platten daher nur die Bewegung in Kraftrichtung zu. Aufgrund der spezifischen Anordnung der beiden Platten zueinander sind zudem Zugverluste bei der Bewegung der beiden Abschnitte zueinander vermeidbar und Längenänderungen in den Platten werden aufgrund der Bewegung der Schweißanlagen-Positionier-Anordnung ausgeglichen.

Es ist ebenfalls bevorzugt, dass die Schweißanlagen-Positionier-Anordnung mindestens zwei Führungssysteme, vorzugsweise mindestens drei und besonders bevorzugt mindestens vier Führungssysteme aufweist. Durch diese Ausführungsform, insbesondere in Kombination mit der Ausführungsform mit mehreren Antriebssystemen, können etwaige Kippbewegungen besonders effizient verhindert werden.

In einer besonders vorteilhaften Ausführungsform der Schweißanlagen-Positionier-Anordnung ist die axiale Länge der Schweißanlagen-Positionier-Anordnung in einem Bereich ≤ 200 mm, vorzugsweise ≤ 150 mm und besonders bevorzugt ≤ 140 mm veränderbar. Dabei ist es besonders bevorzugt, kleine Wege, d.h. kleine axiale Längenänderungen, mit der Schweißanlagen-Positionier-Anordnung zu realisieren. Daher ist es insbesondere bevorzugt, wenn die axiale Länge in einem Bereich ≤ 20 mm, besonders bevorzugt ≤ 15 mm und insbesondere ≤ 10 mm veränderbar ist. Diese besonders bevorzugten Bereiche der axialen Längenänderung sind insbesondere bei der Verarbeitung von filigranen und/oder hochempfindlichen, insbesondere elektronischen, Bauteilen wie beispielsweise Folien für In-Ohr-Kopfhörer oder Smartphones ausreichend.

Es ist ebenfalls bevorzugt, dass im Betrieb der Schweißanlagen-Positionier-Anordnung ein Ist-Weg, um den die axiale Länge der Schweißanlagen-Positionier-Anordnung von einem Ursprungspunkt geändert wird, von einem vorgegebenen Soll-Weg um höchstens 1 mm, bevorzugt um höchstens 0,1 mm und besonders bevorzugt um höchstens 0,01 mm abweicht. Insbesondere durch diese hohe Positioniergenauigkeit sind Kraftspitzen beim Kontakt der beiden zu verschweißenden Bauteile aneinander oder am Oberwerkzeug verhinderbar.

Es ist zudem bevorzugt, dass die die maximale Abweichung bei mindestens 3, vorzugsweise mindestens 5 und besonders bevorzugt mindestens 10, aufeinanderfolgenden Verfahrbewegungen eingehalten wird. Dies bedeutet, dass die maximale Abweichung von beispielsweise 1 mm bei drei aufeinanderfolgenden Verfahrbewegungen nicht überschritten wird, also insbesondere unterschritten wird. Hierdurch werden die Genauigkeit und die Reproduzierbarkeit der Verfahrbewegungen im Vergleich zu bekannten Anordnungen sowie die sich daraus ergebende Präzision der vorliegenden Schweißanlagen-Positionier-Anordnung besonders hervorgehoben.

Eine zweite Alternative einer erfindungsgemäßen Schweißanlagen-Positionier-Anordnung mit der bei Verwendung in einer Schweißanlage ein erstes Bauteil gegen ein zweites Bauteil mit einer Kraft drückbar ist, umfasst: einen statischen ersten Abschnitt und einen relativ zum statischen ersten Abschnitt bewegbaren zweiten Abschnitt, wobei mit dem zweiten Abschnitt im Betrieb das erste Bauteil gegen das zweite Bauteil drückbar ist, mindestens ein Antriebssystem, das mit einem ersten Ende mit dem ersten Abschnitt und mit einem zweiten Ende mit dem zweiten Abschnitt verbunden ist, sowie mindestens ein elastisches Führungssystem mittels dem der erste Abschnitt und der zweite Abschnitt miteinander verbunden sind, wobei der erste Abschnitt und der zweite Abschnitt aufgrund des mindestens einen elastischen Führungssystems entlang nur einer Achse relativ zueinander bewegbar sind, so dass eine axiale Länge der Schweißanlagen-Positionier-Anordnung veränderbar ist, und das mindestens eine Antriebssystem umfasst einen Piezomotor, einen Linearmotor, ein elektromagnetisches Antriebssystem, ein Spulensystem oder einen Antrieb mit Feld- oder Erregerspule.

Zunächst ist hervorzuheben, dass die Ausführungen zur ersten Alternative der Schweißanlagen-Positionier-Anordnung sowie zu den entsprechenden bevorzugten Ausführungsformen grundsätzlich analog für die zweite Alternative gelten. Die zweite erfindungsgemäße Alternative unterscheidet sich von der ersten erfindungsgemäßen Alternative dabei durch das vorhandene Antriebssystem, was nachfolgend diskutiert wird.

Grundsätzlich ist auch im Rahmen der zweiten Alternative ein verlustfreier Antrieb vorgesehen, d. h. ein Antriebssystem, das ohne mechanische Verluste arbeitet. Als ein Beispiel zählen hierzu Piezomotoren oder piezoelektrischen Motoren. Hierbei handelt es sich um kleine Motoren, die den piezoelektrischen Effekt zur Erzeugung einer Bewegung nutzen. Piezomotoren können dabei sowohl lineare als auch rotatorisch arbeiten. Der Bereich, in dem die axiale Länge der Schweißanlagen-Positionier-Anordnung geändert werden kann, liegt bei linearen Piezomotoren konstruktiv bedingt meist bei einigen Zentimetern und ist damit deutlich größer als der Stellwege der in den Motoren eingesetzten piezoelektrischen Festkörperaktuatoren. Daher sind neben den Piezomotoren auch piezoelektrische Festkörperaktuatoren bevorzugt, insbesondere wenn besonders kleine Änderungen in der axialen Länge realisiert werden sollen.

Im Rahmen der Spulensysteme können für geringe Änderungen in der axialen Länge, beispielsweise unter 10 mm, einfache Spulen mit Magnetanker verwendet werden. Bei Field-Coil-Antrieben wird der Permanentmagnet durch eine zweite Spule ersetzt. Bei entsprechender Ansteuerung dieser Antriebe lässt sich eine sehr hohe Dynamik erreichen, so dass diese Antriebe sich ebenfalls für automatisierte Schweißverfahren eignen. Schließlich sind generell alle mechanisch verlustfreien Antriebe wie auch Linearmotoren einsetzbar. Im Hinblick auf die sich durch die Wahl des Antriebssystems ergebenden Vorteile wird auf die Ausführungen zu ersten erfindungsgemäßen Alternative der Schweißanlagen-Positionier-Anordnung verwiesen.

Eine dritte Alternative einer erfindungsgemäßen Schweißanlagen-Positionier-Anordnung mit der bei Verwendung in einer Schweißanlage ein erstes Bauteil gegen ein zweites Bauteil mit einer Kraft drückbar ist, umfasst: einen statischen ersten Abschnitt und einen relativ zum statischen ersten Abschnitt bewegbaren zweiten Abschnitt, wobei mit dem zweiten Abschnitt im Betrieb das erste Bauteil gegen das zweite Bauteil drückbar ist, mindestens ein Antriebssystem, das mit einem ersten Ende mit dem ersten Abschnitt und mit einem zweiten Ende mit dem zweiten Abschnitt verbunden ist, sowie mindestens ein elastisches Führungssystem mittels dem der erste Abschnitt und der zweite Abschnitt miteinander verbunden sind, wobei der erste Abschnitt und der zweite Abschnitt aufgrund des mindestens einen elastischen Führungssystems entlang nur einer Achse relativ zueinander bewegbar sind, so dass eine axiale Länge der Schweißanlagen-Positionier-Anordnung veränderbar ist, und das mindestens eine Antriebssystem umfasst einen rotativen Motor, der mechanische Verluste aufweist, die geringer sind als eine Kraft, mit der im Betrieb das erste Bauteil gegen das zweite Bauteil drückbar ist, wobei die Kraft ≤ 1 kN, vorzugsweise ≤ 500 N und besonders bevorzugt ≤ 250 N ist.

Auch hier ist zunächst hervorzuheben, dass die Ausführungen zur ersten Alternative der Schweißanlagen-Positionier-Anordnung sowie zu den entsprechenden bevorzugten Ausführungsformen grundsätzlich analog für die dritte Alternative gelten. Die dritte erfindungsgemäße Alternative unterscheidet sich von der ersten und der zweiten erfindungsgemäßen Alternative dabei durch das vorhandene Antriebssystem, was nachfolgend diskutiert wird.

Im Gegensatz zu den beiden vorher genannten Antriebssystemen liegt nun ein Antriebssystem mit mechanischen Verlusten vor. Diese mechanischen Verluste sind jedoch geringer, als die aufzubringende Kraft. Daher handelt es sich auch bei der Schweißanlagen-Positionier-Anordnung gemäß der dritten Alternative um eine Präzisions-Schweißanlagen-Positionier-Anordnung, die, insbesondere in Kombination mit dem elastischen Führungssystem, ebenfalls bei filigranen und/oder hochempfindlichen Bauteilen einsetzbar ist. Der Einsatzbereich der Schweißanlagen-Positionier-Anordnung gemäß der dritten Alternative ist jedoch dadurch begrenzt, dass die auf die zu verschweißenden Bauteile aufzubringende Kraft höher sein muss als die Reibungsverluste des Antriebssystems und somit auch höher als bei den beiden vorher diskutierten Alternativen. Im Hinblick auf die sich durch die Wahl dieses Antriebssystems ergebenden Vorteile wird auf die Ausführungen zu ersten und zur zweiten erfindungsgemäßen Alternative der Schweißanlagen-Positionier-Anordnung verwiesen.

Eine erfindungsgemäße Schweißanlage umfasst eine erfindungsgemäße Schweißanlagen-Positionier-Anordnung sowie ein Oberwerkzeug und eine Steuereinheit, wobei der bewegbare zweite Abschnitt der Schweißanlagen-Positionier-Anordnung mittels der Steuereinheit relativ zum Oberwerkzeug so bewegbar ist, dass ein erstes und ein zweites miteinander zu verschweißendes Bauteil unter Aufbringung einer Kraft zwischen dem Oberwerkzeug und dem bewegbaren zweiten Abschnitt der Schweißanlagen-Positionier-Anordnung einklemmbar sind. Aufgrund der Verwendung der erfindungsgemäßen Anordnung in der Schweißanlage sind die oben diskutierten Vorteile erzielbar. Daher wird auf die obigen Ausführungen verwiesen, um unnötige Wiederholungen zu vermeiden.

In einer bevorzugten Ausführungsform der Schweißanlage ist die Kraft, mit der die miteinander zu verschweißenden Bauteile einklemmbar sind, ≤ 1 kN, vorzugsweise ≤ 500 N und besonders bevorzugt ≤ 250 N. Gerade bei filigranen Bauteilen sind noch geringere Kräfte erforderlich, so dass hier Bereiche ≤ 20 N, vorzugsweise ≤ 10 N und insbesondere ≤ 5 N bevorzugt sind.

Es ist weiterhin bevorzugt, dass die zu verschweißenden Bauteile in der Schweißanlage mittels Ultraschallschweißen, Laserschweißen, Infrarotschweißen, Vibrationsschweißen oder Reibschweißen verschweißbar sind. Insbesondere beim Laserschweißen handelt es sich vorzugsweise um ein Laser-Durchstrahlschweißen. Somit ist die erfindungsgemäße Anordnung bei vielseitigen Schweißverfahren zum Einklemmen der zu verschweißenden Bauteile verwendbar. Bei den Schweißverfahren sind jedoch besonders die materialschonenden Verbindungstechniken, wie beispielsweise das Laserschweißen oder das Infrarot-Schweißen, bevorzugt. Dies ist darin begründet, dass mit der Schweißanlage insbesondere filigrane und/oder hochempfindliche Bauteile verschweißbar sind. Mittels der materialschonenden Verbindungstechniken behält beispielsweise ein späteres End- oder Zwischenprodukt seine bevorzugten optischen Eigenschaften bei.

In einer vorteilhaften Ausführungsform weist die Schweißanlage weiterhin einen Hubtisch auf, wobei der statische erste Abschnitt der Schweißanlagen-Positionier-Anordnung integraler Bestandteil des Hubtischs ist oder mit dem Hubtisch verbunden ist. Mittels dieser Ausführungsformen wird die Anordnung beispielsweise in bestehende Schweißanlagen integriert. Zudem kann auf diese Weise ein größerer Zustellweg realisiert werden, so dass die Öffnung zwischen zweitem Abschnitt und Oberwerkzeug entsprechend groß ausfallen kann, was gerade beim manuellen Einbringen der zu verschweißenden Bauteile vorteilhaft ist. Beispielsweise sind in einer Anfangsposition sowohl der Hubtisch als auch der zweite Abschnitt der Schweißanlagen-Positionier-Anordnung maximal vom Oberwerkzeug beabstandet. Die Schweißanlagen-Positionier-Anordnung weist daher anfänglich die geringste axiale Länge auf. Nach dem Einbringen der zu verschweißenden Bauteile wird nun der Hubtisch mit der Schweißanlagen-Positionier-Anordnung in Richtung des Oberwerkzeugs entlang einer Achse, d.h. der vertikalen Achse, verfahren, bis eine erste Zwischenposition erreicht wird. In gleicher Weise ist auch ein Verfahren bzw. Bewegen des Oberwerkzeugs in Richtung des Hubtischs anwendbar. Des Weiteren bevorzugt werden Kombinationen dieser Bewegungen verwendet, so dass sich Hubtisch und Oberwerkzeug gleichzeitig oder zeitlich versetzt zueinander aufeinander zu oder voneinander weg bewegen. Im Anschluss daran oder kurz vor Beendigung der Verfahrbewegung des Hubtischs und/oder des Oberwerkzeugs, wird der zweite Abschnitt der Schweißanlagen-Positionier-Anordnung in Richtung Oberwerkzeug verfahren und die zu verschweißenden Bauteile werden aufgrund der Verfahrbewegung des zweiten Abschnitts gegen das Oberwerkzeug gedrückt und dort mit einer gewünschten Kraft eingeklemmt.

Es ist weiterhin bevorzugt, dass bei der Schweißanlage eine Ist-Kraft, mit der die miteinander zu verschweißenden Bauteile im Betrieb eingeklemmt werden, von einer vorgegebenen Soll-Kraft um höchstens 2,5 N, bevorzugt um höchstens 1 N und besonders bevorzugt um höchstens 0,5 N abweicht. Auf diese Weise werden insbesondere Kraftspitzen beim Kontakt der zu verschweißenden Bauteile miteinander oder mit dem Oberwerkzeug vermieden, was einer möglichen Bauteilzerstörung vorbeugt.

In einer weiteren vorteilhaften Ausführungsform der Schweißanlage weicht ein Ist-Weg, um den die axiale Länge der Schweißanlagen-Positionier-Anordnung im Betrieb von einem Ursprungspunkt geändert wird, von einem vorgegebenen Soll-Weg um höchstens 1 mm, bevorzugt höchstens 0,1 mm und besonders bevorzugt um höchstens 0,01 mm abweicht. Aufgrund dieser hohen Positioniergenauigkeit ist die Schweißanlage besonders für die Verarbeitung kleiner, filigraner und/oder hochempfindlicher Bauteile geeignet.

Weiterhin ist es vorteilhaft, dass bei der Schweißanlage die maximale Abweichung bei mindestens 3, vorzugsweise mindestens 5 und besonders bevorzugt mindestens 10, aufeinanderfolgenden Schweißprozessen eingehalten wird. Dies bedeutet, dass die maximale Abweichung von beispielsweise 1 mm bei drei aufeinanderfolgenden Schweißprozessen nicht überschritten wird, also insbesondere unterschritten wird. Hierdurch werden die Genauigkeit und die Reproduzierbarkeit der Schweißprozesse im Vergleich zu bekannten Anordnungen hervorgehoben.

Ein erfindungsgemäßes Schweißverfahren zum Verbinden eines ersten Bauteils mit einem zweiten Bauteil unter Verwendung einer erfindungsgemäßen Schweißanlage umfasst die Schritte: Anordnen des ersten Bauteils am bewegbaren zweiten Abschnitt der Schweißanlagen-Positionier-Anordnung und des zweiten Bauteils auf dem ersten Bauteil oder in einem Oberwerkzeug der Schweißanlage, Bewegen des zweiten Abschnitts relativ zum ersten Abschnitt so, dass das erste und das zweite Bauteil unter Aufbringung einer Kraft von insbesondere ≤ 1 kN, vorzugsweise ≤ 500 N und besonders bevorzugt ≤ 250 N, zwischen dem Oberwerkzeug und dem zweiten Abschnitt eingeklemmt gehalten werden, sowie Verschweißen der beiden Bauteile miteinander. Da das erfindungsgemäße Schweißverfahren die erfindungsgemäße Schweißanlage verwendet, wird im Hinblick auf die sich ergebenden Vorteile auf die obigen Ausführungen verwiesen, um unnötige Wiederholungen zu vermeiden.

In einer bevorzugten Ausführungsform des Schweißverfahrens weist die Schweißanlage einen Hubtisch auf und das Schweißverfahren umfasst den weiteren Schritt: Bewegen des Hubtischs in Richtung des Oberwerkzeugs der Schweißanlage vor dem Bewegen des zweiten Abschnitts relativ zum ersten Abschnitt, so dass zunächst ein gewünschter Abstand zwischen zweitem Abschnitt und Oberwerkzeug einstellbar ist. In gleicher Weise ist alternativ oder zusätzlich der Schritt bevorzugt: Bewegen des Oberwerkzeugs in Richtung der Schweißanlagen-Positionier-Anordnung vor dem Bewegen des zweitens Abschnitts relativ zum ersten Abschnitt, so dass zunächst ein gewünschter Abstand zwischen zweitem Abschnitt und Oberwerkzeug einstellbar ist.

Somit ist die erfindungsgemäße Schweißanlagen-Positionier-Anordnung als zusätzliches Bauteil neben einem üblicherweise herkömmlichen Hubtisch vorhanden. Dieser Aufbau eignet sich insbesondere für eine manuelle Bestückung der Schweißanlage mit den zu verschweißenden Bauteilen oder bei zu verschweißenden Bauteilen, deren kombinierte Bauteilhöhe größer ist als eine maximale Längenänderung der Schweißanlagen-Positionier-Anordnung.

Es ist weiterhin bevorzugt, dass bei dem Schweißverfahren eine Regelung der Kraft über einen Motorstrom des Antriebssystems erfolgt. Auf diese Weise ist kein eigener Kraftsensor erforderlich, da beispielsweise die Kraftregelung über einen Motorstrom für den Tauchspulenantrieb o.ä. erfolgt. Dieser Aufbau eignet sich daher insbesondere für Antriebssysteme, deren Motorstrom sich proportional, insbesondere linear, zur aufgebrachten Kraft verhält.

Gemäß einer Ausführungsform des Schweißverfahrens weicht eine Ist-Kraft, mit der die miteinander zu verschweißenden Bauteile eingeklemmt werden, von einer vorgegebenen Soll-Kraft um höchstens 2,5 N, bevorzugt um höchstens 1 N und besonders bevorzugt um höchstens 0,5 N ab. Zusätzlich oder alternativ ist es bevorzugt, dass ein Ist-Weg, um den die axiale Länge der Schweißanlagen-Positionier-Anordnung von einem Ursprungspunkt geändert wird, von einem vorgegebenen Soll-Weg um höchstens 1 mm, bevorzugt um höchstens 0,1 mm und besonders bevorzugt um höchstens 0,01 mm abweicht. In einer bevorzugten Ausführungsform des Schweißverfahrens wird die maximale Abweichung bei mindestens 3, vorzugsweise mindestens 5 und besonders bevorzugt mindestens 10, aufeinanderfolgenden Schweißprozessen eingehalten wird. Mit diesen Ausgestaltungen, alleine oder in Kombination miteinander, wird die Genauigkeit des Schweißverfahrens hervorgehoben. Hierdurch wird insbesondere deutlich, dass gerade filigrane und/oder empfindliche Bauteile mittels der Schweißanlage eingeklemmt werden könne, um diese zu verschweißen. Dabei wird eine Zerstörung oder Beschädigung der Bauteile aufgrund der hohen Genauigkeit im Vergleich zu bekannten Anlagen verhindert oder vermieden.

Ein erfindungsgemäßer Nachrüstsatz für eine Schweißanlage, insbesondere eine Schweißanlage mit Hubtisch, umfasst eine erfindungsgemäße Schweißanlagen-Positionier-Anordnung. Mit dem Nachrüstsatz lassen sich bestehende Schweißanlagen mit der erfindungsgemäßen Schweißanlagen-Positionier-Anordnung nachrüsten. Daher wird im Hinblick auf die sich ergebenden Vorteile auf die obigen Ausführungen zur Schweißanlagen-Positionier-Anordnung verwiesen. Es versteht sich, dass auch in diesem bevorzugten Nachtrüstsatz Hubtisch und Oberwerkzeug relativ zueinander bewegbar angeordnet sind. Das bedeutet, dass sich der Hubtisch in Richtung Oberwerkzeug bewegt oder das Oberwerkzeug in Richtung Hubtisch oder dass diese Bewegungsalternativen miteinander kombiniert werden.

Ein erfindungsgemäßes Nachrüstverfahren für eine Schweißanlage, insbesondere einer Schweißanlage mit einem Hubtisch, mit einer erfindungsgemäßen Schweißanlagen-Positionier-Anordnung umfasst die Schritte: Bereitstellen einer erfindungsgemäßen Schweißanlagen-Positionier-Anordnung und Anbringen der Schweißanlagen-Positionier-Anordnung an der Schweißanlage, insbesondere am Hubtisch, derart, dass im Betrieb ein erstes und ein zweites Bauteil unter Aufbringung einer Kraft zwischen einem Oberwerkzeug der Schweißanlage und dem zweiten Abschnitt der Schweißanlagen-Positionier-Anordnung einklemmbar sind. Mit dem Nachrüstverfahren lassen sich bestehende Schweißanlagen mit der erfindungsgemäßen Schweißanlagen-Positionier-Anordnung nachrüsten. Daher wird im Hinblick auf die sich ergebenden Vorteile ebenfalls auf die obigen Ausführungen zur Schweißanlagen-Positionier-Anordnung verwiesen.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine Schweißanlage gemäß Stand der Technik,
- Figur 2: eine Explosionsansicht einer ersten Ausführungsform einer erfindungsgemäßen Schweißanlagen-Positionier-Anordnung mit einem Antriebssystem und vier elastischen Führungssystemen,
- Figur 3: eine perspektivische Ansicht einer Ausführungsform eines elastischen Führungssystems,
- Figur 4: eine Explosionsansicht einer zweiten Ausführungsform einer erfindungsgemäßen Schweißanlagen-Positionier-Anordnung mit drei Antriebssystemen und drei elastischen Führungssystemen,
- Figur 5: eine perspektivische Ansicht eines Hubtisch sowie der Schweißanlagen-Positionier-Anordnung gemäß Figur 2 und Figur 4,
- Figur 6: eine perspektivische Ansicht einer dritten Ausführungsform einer erfindungsgemäßen Schweißanlagen-Positionier-Anordnung mit einem Antriebssystem und drei elastischen Führungssystemen,
- Figur 7: eine Draufsicht auf die dritte Ausführungsform gemäß Figur 6,
- Figur 8: eine perspektivische Ansicht einer vierten Ausführungsform einer erfindungsgemäßen Schweißanlagen-Positionier-Anordnung mit einem Antriebssystem und vier elastischen Führungssystemen,
- Figur 9: eine Draufsicht auf die vierte Ausführungsform gemäß Figur 8,
- Figur 10: eine perspektivische Ansicht einer fünften Ausführungsform einer erfindungsgemäßen Schweißanlagen-Positionier-Anordnung mit einem Antriebssystem und vier elastischen Führungssystemen,
- Figur 11: eine perspektivische Ansicht einer sechsten Ausführungsform einer erfindungsgemäßen Schweißanlagen-Positionier-Anordnung mit einem Antriebssystem und einer Zentrierspinne als elastisches Führungssystem,
- Figur 12: eine Schnittansicht der sechsten Ausführungsform gemäß Figur 11,
- Figur 13: eine perspektivische Ansicht der sechsten Ausführungsform gemäß Figur 11 mit halbtransparenter Ummantelung,
- Figur 14: eine perspektivische Ansicht einer siebten Ausführungsform einer erfindungsgemäßen Schweißanlagen-Positionier-Anordnung ähnlich zur sechsten Ausführungsform, wobei die Sensoren im Inneren angeordnet sind,
- Figur 15: eine perspektivische Ansicht der siebten Ausführungsform gemäß Figur 14 mit halbtransparenter Ummantelung,
- Figur 16: eine perspektivische Ansicht einer achten Ausführungsform einer erfindungsgemäßen Schweißanlagen-Positionier-Anordnung mit einem Antriebssystem,
- Figur 17: eine Schnittansicht der achten Ausführungsform gemäß Figur 16,
- Figur 18: eine Schnittansicht einer neunten Ausführungsform einer erfindungsgemäßen Schweißanlagen-Positionier-Anordnung,
- Figur 19: einer Ausführungsform einer erfindungsgemäßen Schweißanlage,
- Figur 20: ein Flussdiagramm einer Ausführungsform eines erfindungsgemäßen Schweißverfahrens und
- Figur 21: ein Flussdiagramm einer Ausführungsform eines erfindungsgemäßen Nachrüstverfahrens.

### 5. Detaillierte Beschreibung der bevorzugten Ausführungsformen

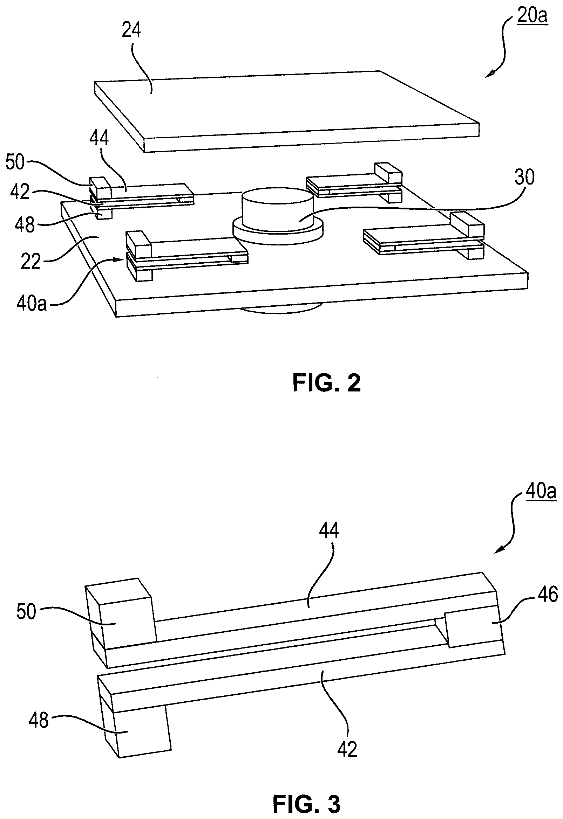

Nachfolgend werden unterschiedliche bevorzugte Ausführungsformen von Schweißanlagen-Positionier-Anordnungen 20a-20i unter Bezugnahme auf die Figuren 2 bis 18 diskutiert. Die Schweißanlagen-Positionier-Anordnungen können, aufgrund ihrer Dimensionierung, auch als Mini-Hubtisch bezeichnet werden. Beispielsweise sind mit diesem Mini-Hubtisch besonders filigrane und/oder hochempfindliche, beispielsweise elektronische, Bauteile in einer Schweißanlage verarbeitbar. Insbesondere stellen die dargestellten Ausführungsformen alle aufgrund der erzielbaren Genauigkeit bei der Positionierung und der Krafteinstellung Präzisions-Schweißanlagen-Positionier-Anordnungen 20a-20i dar, was nun detailliert erläutert wird.

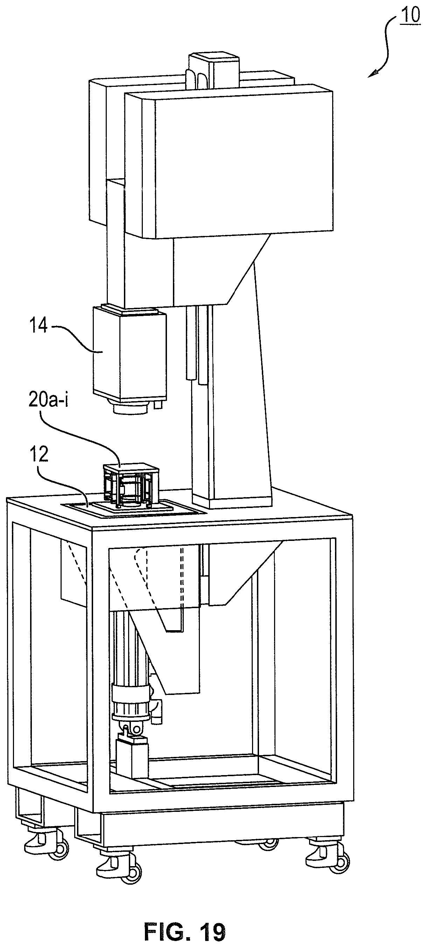

Zuerst Bezug nehmend auf Figur 2 ist eine erste Ausführungsform einer erfindungsgemäßen Schweißanlagen-Positionier-Anordnung 20a dargestellt. Die Schweißanlagen-Positionier-Anordnung 20a umfasst einen statischen ersten Abschnitt 22 und einen relativ zum statischen ersten Abschnitt bewegbaren zweiten Abschnitt 24. Im dargestellten Ausführungsbeispiel handelt es sich bei den beiden Abschnitten 22, 24 um zwei rechteckige Platten. Die Dimensionierung der Platten ist dabei auf die gewünschte Anwendung anpassbar. Im späteren Betrieb werden die zu verschweißenden Bauteile zwischen dem zweiten Abschnitt 24 und einem Oberwerkzeug 14 einer Schweißanlage 10 eingeklemmt, wie in Figur 19 gezeigt. Daher ist ein erstes Bauteil gegen ein zweites Bauteil mittels des zweiten Abschnitts 24 drückbar.

Die Schweißanlagen-Positionier-Anordnung 20a weist weiterhin mittig ein Antriebssystem auf, das einen Tauchspulenantrieb 30 oder Voice Coil Aktuator umfasst. Ein erstes Ende des Tauchspulenantriebs 30 ist mit dem ersten Abschnitt 22 verbunden und ein zweites Ende ist mit dem zweiten Abschnitt 24 verbunden.

Aufgrund dieser Antriebswahl handelt es sich bei der Schweißanlagen-Positionier-Anordnung 20a um eine Präzisions-Schweißanlagen-Positionier-Anordnung. Dies bedeutet, dass gerade die Durchführung kleinster Bewegungen und/oder das Aufbringen kleinster Kräfte mittels der Schweißanlagen-Positionier-Anordnung 20a realisierbar sind. In anderen Worten handelt es sich bei der Schweißanlagen-Positionier-Anordnung 20a um einen Mini-Hubtisch, insbesondere einen Präzisions-Mini-Hubtisch.

Begründet ist die Präzision der Schweißanlagen-Positionier-Anordnung 20a darin, dass es sich bei einem Tauchspulenantrieb generell um einen hoch dynamischen Antrieb handelt, der keine mechanische Reibung aufweist. Im Hinblick auf eine einstellbare axiale Länge, d.h. den einstellbaren Abstand zwischen der ersten Platte des ersten Abschnitts 22 und der zweiten Platte des zweiten Abschnitts 24, hängt diese von der Dimensionierung des Tauchspulenantriebs ab. Üblicherweise lassen sich jedoch Amplituden und somit eine Änderung der axialen Länge zwischen 0,25-100 mm realisieren. Im Hinblick auf die aufbringbaren Kräfte können diese zwischen 0 N und 2 kN liegen. Eine Beschleunigung bis 300 m/s² und Geschwindigkeiten bis 5 m/s sind ebenfalls realisierbar. Zusätzlich zeichnet sich der Tauchspulenantrieb 30 insbesondere durch die sehr hohe Positionier-Genauigkeit aus, die insbesondere bei +/- 0,1 µm liegt. Zudem verhält sich der Motorstrom linear und kann zur Kraftregelung benutzt werden, sodass kein Kraftsensor für eine Regelung der Ist-Kraft erforderlich ist. Wie aus den obigen Ausführungen ersichtlich ist, lässt sich der Tauchspulenantrieb 30 mit der entsprechenden Steuerung hochgenau positionieren und die Kraft ist ebenfalls hochgenau steuer- und/oder regelbar. Zudem sind Tauchspulenantriebe aufgrund ihrer hohen Geschwindigkeit besonders für automatisierte Anlagen mit hoher Taktrate geeignet.

In alternativ bevorzugten Ausführungen handelt es sich bei dem Antriebssystem um einen Piezomotor, einen Linearmotor, ein elektromagnetisches Antriebssystem, ein Spulensystem oder einen Antrieb mit Feld- oder Erregerspule. Ebenso ist es bevorzugt, dass das Antriebssystem einen rotativen Motor umfasst, der mechanische Verluste aufweist, die geringer sind als eine Kraft, mit der im Betrieb das erste Bauteil gegen das zweite Bauteil drückbar ist, wobei die Kraft ≤ 1 kN, vorzugsweise ≤ 500 N und besonders bevorzugt ≤ 250 N ist. Mit Ausnahme des rotativen Motors mit mechanischen Verlusten weisen die übrigen Antriebssysteme keine mechanischen Verluste, beispielsweise aufgrund von Reibung zwischen zwei Komponenten, auf. Es handelt sich daher im Rahmen der vorliegenden Erfindung um verlustfreie Antriebe mit denen ein Präzisions-Mini-Hubtisch realisierbar ist.

Weiterhin weist die Schweißanlagen-Positionier-Anordnung 20a in der dargestellten Ausführung vier elastische Führungssysteme 40a auf. Der erste Abschnitt 22 und der zweite Abschnitt 24 sind über die elastischen Führungssysteme 40a miteinander verbunden. Aufgrund der Kombination des Tauchspulenantriebs 30 mit dem elastischen Führungssystem 40a sind der erste Abschnitt 22 und der zweite Abschnitt 24 entlang nur einer Achse relativ zueinander bewegbar. Durch die Kombination des elastischen Führungssystems 40a mit dem Tauchspulenantrieb 30 ist eine axiale Länge der Schweißanlagen-Positionier-Anordnung 20a veränderbar.

Das elastische Führungssystem 40a weist keine mechanischen Verluste auf, arbeitet also im Rahmen der vorliegenden Erfindung verlustfrei. In diesem Zusammenhang bedeutet verlustfrei, dass vorzugweise keine Reibung oder bezogen auf die zum Verschweißen der beiden Bauteile gewünschte Kraft nur einen vernachlässigbar geringe Reibung zwischen den bewegbaren Komponenten des elastischen Führungssystems 40a auftritt.

Durch die Kombination des reibungsarmen und genauen Antriebs, nämlich des Tauchspulenantriebs 30, zum Kraftaufbau und zur Einstellung der gewünschten axialen Länge sowie eines reibungsarmen elastischen Führungssystems 40a, werden vorzugsweise jegliche Reibungsverluste in der Schweißanlagen-Positionier-Anordnung 20a verhindert. Im Ergebnis werden daher bevorzugt alle Hysterese-Erscheinungen und Stick-Slip-Effekte vermieden oder zumindest deutlich reduziert im Vergleich zu bekannten Hubtischen für Schweißanlagen. Daher eignet sich die Schweißanlagen-Positionier-Anordnung 20a insbesondere zur Verwendung in einer Schweißanlage, mit der kleine Bauteile verarbeitet werden sollen, wie beispielsweise Folien für In-Ohr-Kopfhörer oder die Herstellung von Smartphones. Hohe Kraftspitzen bei einer Kontakterkennung zwischen den beiden Bauteilen werden zudem reduziert und vorzugsweise völlig verhindert. Damit kann der Trigger-Punkt für den eigentlichen Schweißbeginn hochgenau gesteuert werden, was zu reproduzierbaren Schweißung führt und jegliche dadurch verursachte Bauteilzerstörung kann verhindert werden.

Zusätzlich Bezug nehmend auf Figur 3 wird ein Aufbau des elastischen Führungssystems 40a erläutert. Hierbei umfasst das elastische Führungssystem 40a eine erste Platte 42 und eine zweite Platte 44. Die erste Platte 42 und die zweite Platte 44 sind an einem ersten axialen Ende über ein Abstandselement 46 miteinander verbunden. Weiterhin ist die erste Platte 42 an einem zweiten axialen Ende mit dem ersten Abschnitt 22 verbunden. Entsprechend ist die zweite Platte 44 an einem zweiten axialen Ende mit dem zweiten Abschnitt 24 verbunden. Im dargestellten Ausführungsbeispiel sind die beiden Platten 42, 44 jeweils über ein erstes 48 und ein zweites Verbindungselement 50 mit dem jeweiligen Abschnitt 22, 24 verbunden.

Bei den beiden Platten 42, 44 handelt es sich beispielsweise um Blattfedern oder generell Federplatten. Diese weisen eine größere Länge im Vergleich zu einer Breite auf. In der gezeigten Ausführungsform sind die elastischen Führungssysteme 40a jeweils benachbart zu den Eckbereichen des ersten 22 und des zweiten Abschnitts 24 so angeordnet, dass die Längsseiten sowie die Seiten quer dazu entlang parallel verlaufender Achsen ausgerichtet sind. Die parallel verlaufenden Achsen verlaufen ebenfalls parallel zu den Kanten des ersten 22 und des zweiten Abschnitts 24. Das die beiden Platten 42, 44 verbindende Abstandselement 46 ist bezogen auf die Schweißanlagen-Positionier-Anordnung 20a nach innen gerichtet angeordnet.

Aufgrund dieser speziellen Anordnung lassen die Platten 42, 44 nur eine Bewegungsrichtung zu und dienen somit als Führung für alle anderen Richtungen. Aufgrund der spezifischen Anordnung der beiden Platten 42, 44 zueinander sind zudem Zugverluste bei der Bewegung der beiden Abschnitte 22, 24 zueinander vermeidbar und Längenänderungen in den Platten 42, 44 werden aufgrund der Bewegung der Schweißanlagen-Positionier-Anordnung 20a ausgeglichen. Aufgrund der Mehrzahl an elastischen Führungssystemen 40a können zudem etwaige unerwünschte Kippbewegungen besonders effizient verhindert werden.

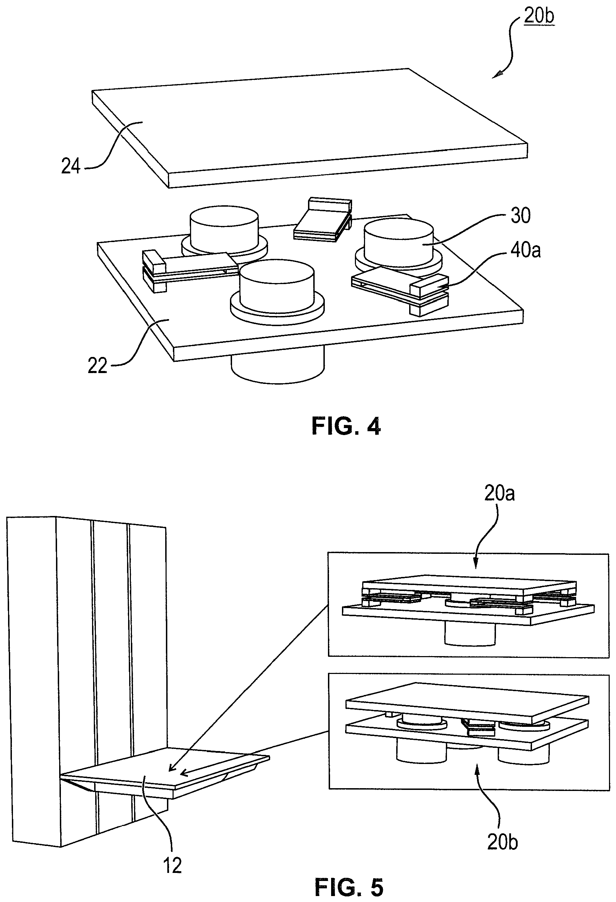

In Figur 4 ist eine zweite Ausführungsform einer Schweißanlagen-Positionier-Anordnung 20b gezeigt. Hierbei sind drei Tauschspulenantriebe 30 vorgesehen, die auf einem gedachten Kreis gleichmäßig beabstandet angeordnet sind. Zudem sind drei elastische Führungssysteme 40a vorgesehen, die ebenfalls auf einem gedachten Kreis gleichmäßig beabstandet angeordnet sind. Zudem ist jeweils ein Tauchspulenantrieb 30 im Wechsel mit einem elastischen Führungssystem 40a angeordnet. Mittels der Mehrzahl an Tauchspulenantrieben 30 und der Mehrzahl an elastischen Führungssystemen 40a können in einem synchronisierten Betrieb der Tauchspulenantriebe 30 unsymmetrische Lasten gezielt ausgeglichen werden. Auf diese Weise kann entweder die Parallelität der beiden Abschnitte 22, 24 zueinander gewährleistet werden oder Kräfte können gleichmäßig auf die Schweißflächen der zu verschweißenden Bauteile verteilt werden. Auch können Bauteiltoleranzen, die ein Kippen des Tisches erfordern, ausgeglichen werden.

Figur 5 illustriert die Anordnung einer der oben diskutierten Ausführungen der Schweißanlagen-Positionier-Anordnung 20a, 20b auf einem Hubtisch 12. Insbesondere durch diese Kombination können größere Verstell-Wege mittels des Hubtischs 12 realisiert werden, während eine Zustellbewegung selbst hochpräzise mittels der Schweißanlagen-Positionier-Anordnung 20a, 20b erfolgt. Anstelle oder zusätzlich zur Verfahrbarkeit des Hubtischs 12 kann auch eine Verfahrbarkeit des Oberwerkzeugs in Richtung der Positionier-Anordnung 20a, 20b vorgesehen sein.

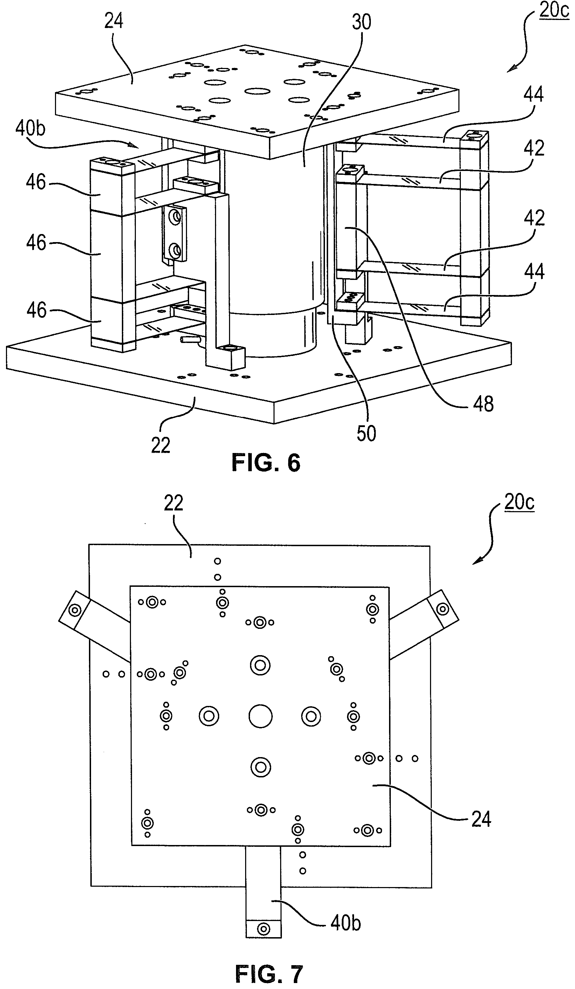

Nun Bezug nehmend auf die Figuren 6 bis 10 sind drei weitere Ausführungen von Schweißanlagen-Positionier-Anordnungen 20c, 20d und 20e dargestellt. Diese Ausführungen sind den ersten beiden Ausführungen ähnlich, unterscheiden sich aber im Aufbau und der Anordnung des elastischen Führungssystems 40b.

So zeigen die Figuren 6 und 7 eine dritte Ausführungsform einer Schweißanlagen-Positionier-Anordnung 20c. Mittig ist der Tauchspulenantrieb 30 vorgesehen. Im Unterschied zur ersten und zur zweiten Ausführungsform umfasst das elastische Führungssystem 40b zwei übereinander angeordnete erste 42 und zweite Platten 44. Die ersten Platten 42 sind mittels eines gemeinsamen ersten Verbindungselements 48 mit dem ersten Abschnitt 22 verbunden. Die zweiten Platten 44 sind entsprechend mittels eines gemeinsamen zweiten Verbindungselements 50 mit dem zweiten Abschnitt 24 verbunden. Insgesamt sind drei elastische Führungssysteme 40b vorgesehen, die gleichmäßig beabstandet auf einem gedachten Kreis um den Tauchspulenantrieb 30 angeordnet sind. Ein gemeinsames Abstandselement 46, das die ersten 42 und die zweiten Platten 44 miteinander verbindet, ist radial außen bezogen auf den gedachten Kreis angeordnet. Insbesondere Bezug nehmend auf Figur 7 ist der zweite Abschnitt 24 kleiner, weist also eine geringere Kantenlänge, als der erste Abschnitt 22 auf.

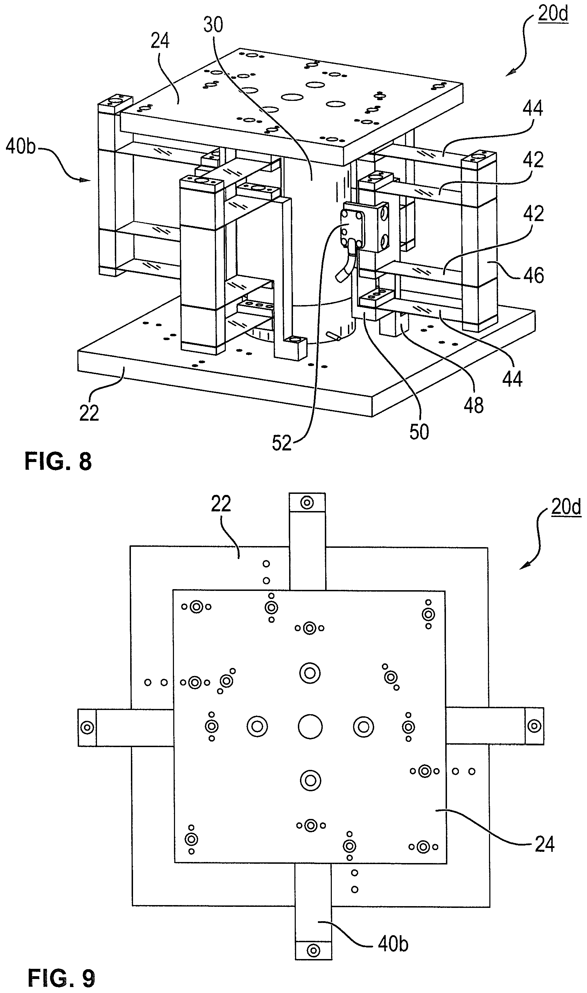

In den Figuren 8 und 9 ist eine vierte Ausführungsform einer Schweißanlagen-Positionier-Anordnung 20d gezeigt. Diese unterscheidet sich von der dritten Ausführungsform gemäß den Figuren 6 und 7 nur in der Anzahl und der Anordnung der verwendeten elastischen Führungssysteme 40b. So sind anstelle von drei elastischen Führungssystemen 40b vier elastische Führungssysteme 40b vorgesehen. Jedes elastische Führungssystem 40b ist mittig bezogen auf eine Kantenlänge der jeweiligen Seite des ersten 22 und des zweiten Abschnitts 24 angeordnet. Das Abstandselement 26 ist jeweils weiter weg vom Tauchspulenantrieb 30 angeordnet, als die beiden Verbindungselemente 48, 50. Zudem ist schematisch an einem der elastischen Führungssysteme 40b ein Wegsensor 52 vorhanden, der in der dargestellten Ausführungsform am ersten Verbindungselement 48 angeordnet ist und eine Bewegung des zweiten Verbindungselements 50, d.h. auch des zweiten Abschnitts 24, erfasst.

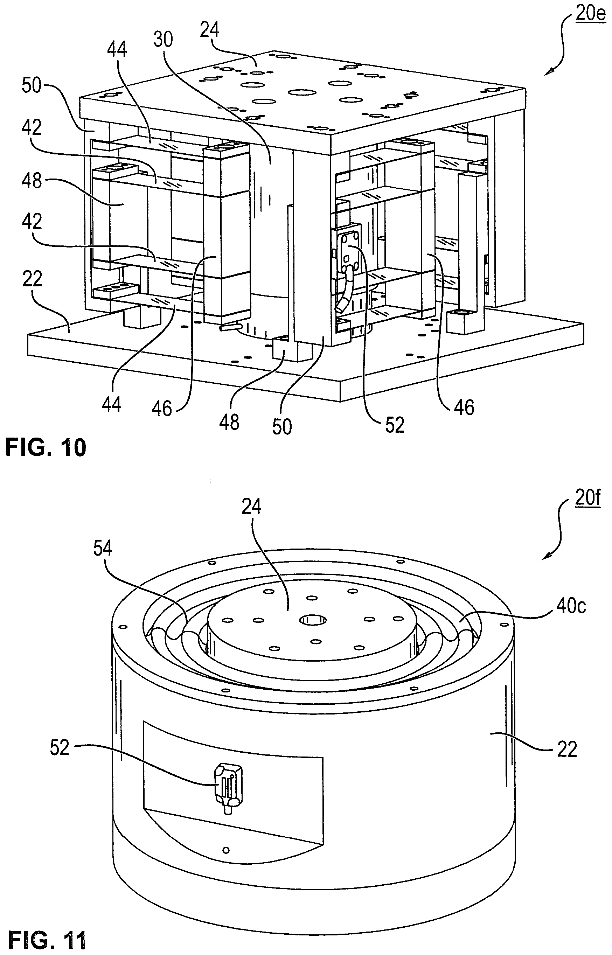

Figur 10 zeigt schließlich eine fünfte Ausführungsform einer Schweißanlagen-Positionier-Anordnung 20e. Diese unterscheidet sich von der vierten Ausführungsform gemäß den Figuren 8 und 9 in der Anordnung der elastischen Führungssysteme 40b. Hier sind die zweiten Verbindungselemente 50 benachbart zu den jeweiligen Ecken des zweiten Abschnitts 24 angeordnet und die ersten 42 und zweiten Platten 44 sind mit ihrer Längsseite parallel zu den jeweiligen Katen des ersten 22 und des zweiten Abschnitts 24 angeordnet. Auf diese Weise sind die Abstandselemente 46 nicht vorstehend angeordnet, wenn die Schweißanlagen-Positionier-Anordnung von oben, d.h. vom zweiten Abschnitt 24 her betrachtet wird.

Zwei weitere Ausführungsformen einer Schweißanlagen-Positionier-Anordnung 20f und 20g sind in den Figuren 11 bis 15 dargestellt. Die hier dargestellten Ausführungsformen unterscheiden sich dabei grundsätzlich von den oben diskutierten Ausführungsformen.

Zuerst Bezug nehmend auf die Figuren 11 bis 13 wird die sechste Ausführungsform der Schweißanlagen-Positionier-Anordnung 20f erläutert. In dieser Ausführungsform wird der erste Abschnitt 22 durch einen zylinderförmigen Körper gebildet, der einseitig geschlossen ausgebildet ist. Mittig im ersten Abschnitt 22 ist der Tauchspulenantrieb 30 angeordnet, wobei der zweite Abschnitt 24 am zweiten axialen Ende des Tauchspulenantriebs 30 angeordnet ist. Der zweite Abschnitt 24 ist beispielsweise ebenfalls zylinderförmig mit einem geschlossenen Ende ausgebildet, wobei der so geformte zweite Abschnitt 24 über dem Tauchspulenantrieb 30 angeordnet ist. Daher ist eine Öffnung des zweiten Abschnitts 24 dem Boden des ersten Abschnitts 22 zugewandt.

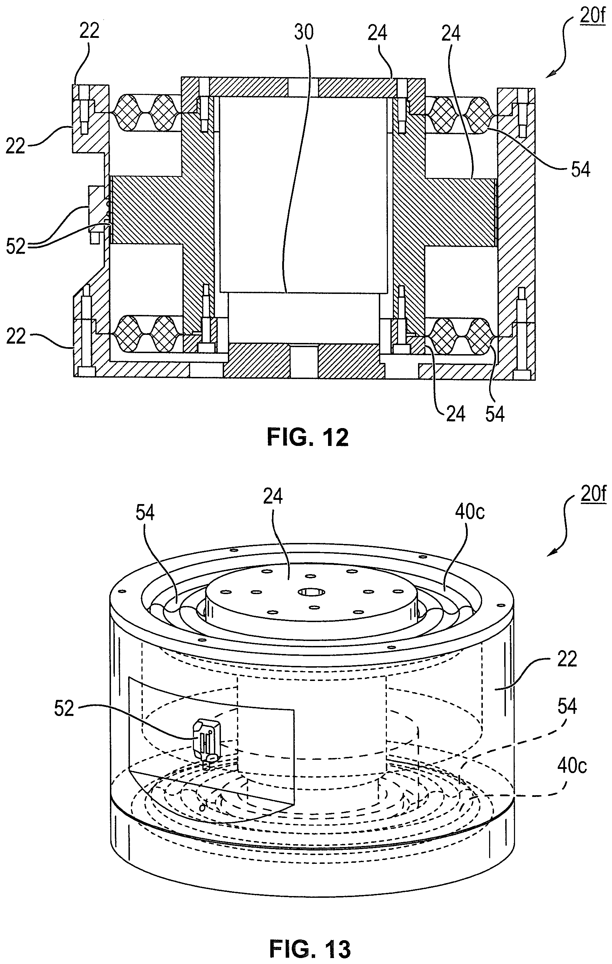

Verbunden sind der erste 22 und der zweite Abschnitt 24 miteinander mittels des elastischen Führungssystems 40c. Vorliegend sind davon zwei vorhanden, die jeweils aus einer Zentrierspinne 54 bestehen. In diesem Zusammenhang weisen sowohl der erste Abschnitt 22 als auch der zweite Abschnitt 24 drei Bereiche auf, die jeweils mittels Schrauben miteinander verbunden sind, wie in Figur 12 dargestellt. So weist der erste Abschnitt 22 einen kreisförmigen Bodenbereich, einen zylinderförmigen Mittelbereich und eine ringförmige Oberseite auf. Der zweite Abschnitt 24 umfasst eine kreisförmige Oberseite, einen zylinderförmigen Mittelbereich mit radial nach außen ragendem Vorsprung und einen ringförmigen Boden. Eine erste Zentrierspinne 54 ist radial außen zwischen der ringförmigen Oberseite und dem zylinderförmigen Mittelbereich des ersten Abschnitts 22 und radial innen zwischen der kreisförmigen Oberseite und dem zylinderförmigen Mittelbereich des zweiten Abschnitts 24 befestigt. Analog dazu ist eine zweite Zentrierspinne 54 radial außen zwischen dem kreisförmigen Boden und dem zylinderförmigen Mittelbereich des ersten Abschnitts 22 und radial innen zwischen dem ringförmigen Boden und dem zylinderförmigen Mittelbereich des zweiten Abschnitts 24 befestigt. Weiterhin sind die kreisförmige Oberseite des zweiten Abschnitts 24 und die ringförmige Oberseite des ersten Abschnitts 22 im Ausgangszustand vorzugsweise nahezu fluchtend miteinander angeordnet, wie dies in Figur 12 erkennbar ist. Der radiale Vorsprung im zylinderförmigen Mittelbereich des zweiten Abschnitts 24 dient der Erfassung einer Bewegung des zweiten Abschnitts 24 relativ zum ersten Abschnitt 22 mittels des Wegsensors 52.

Neben der Zentrierspinne 54, wie sie aus Lautsprechern bekannt ist, sind alternativ auch Führungsscheiben, Membranen, Tellerführungen, mehrfach Linearfedern, o. ä. in gleicher Weise bevorzugt. Im Gegensatz zu herkömmlichen Führungen weist das elastische Führungssystem nur innere Reibung auf, aber keine mechanischen Verluste. Daher wird das elastische Führungssystem auch als verlustfrei bezeichnet. Insbesondere durch die Kombination des elastischen Führungssystems mit dem Antriebssystem sind sowohl der Abstand zwischen den beiden Abschnitten, also ein Hub- oder Verstell-Weg, wie auch eine später mit der Schweißanlagen-Positionier-Anordnung 20f aufzubringende Kraft hoch genau steuer- und/oder regelbar.

Im Betrieb der Schweißanlagen-Positionier-Anordnung 20f bewegt sich somit die Oberseite des zweiten Abschnitts 24 nach oben, so dass ein Abstand zwischen dem ringförmigen Boden des zweiten Abschnitts 24 und dem kreisförmigen Boden des ersten Abschnitts 22 vergrößert wird. Nach Beendigung des Schweißprozesses kehren die beiden Abschnitte 22, 24 beispielsweise wieder in ihre Ausgangslage oder in eine geeignete Zwischenposition zurück.

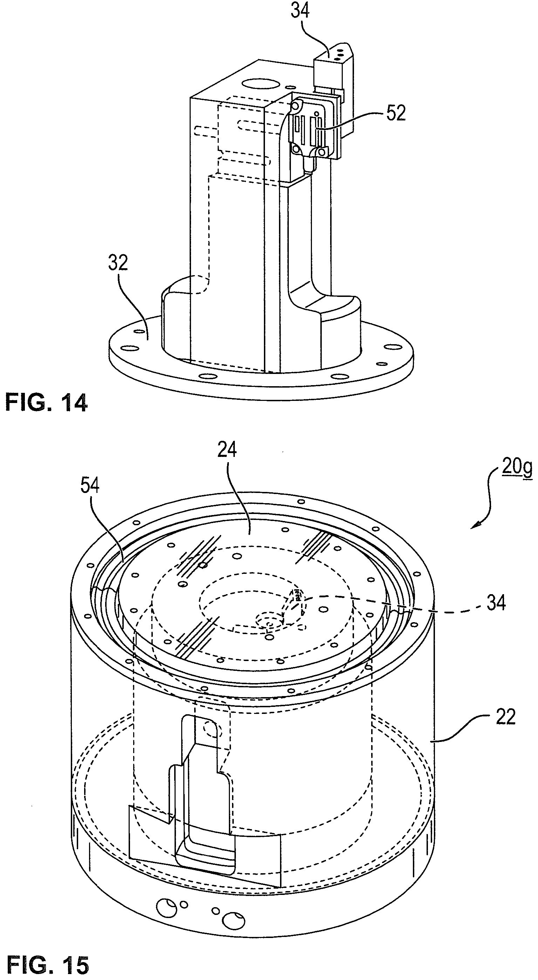

In den Figuren 14 und 15 ist eine abgewandelte Ausführungsform im Vergleich zu der Ausführungsform der Figuren 11 bis 13 dargestellt. Die beiden Ausführungsformen unterscheiden sich dadurch, dass in der Ausführungsform gemäß den Figuren 14 und 15 der Wegsensor 52 im Inneren des Tauchspulenantriebs 30 angeordnet ist. Dies macht den Gesamtaufbau der Schweißanlagen-Positionier-Anordnung 20g noch kompakter. Figur 14 zeigt hierzu den Aufbau im Inneren des Tauchspulenantriebs 30. Mit 32 ist ein Befestigungsbereich für einen Kern des Tauchspulenantriebs 30 bezeichnet und mit 34 ein Verbindungsbereich für den zweiten Abschnitt 24.

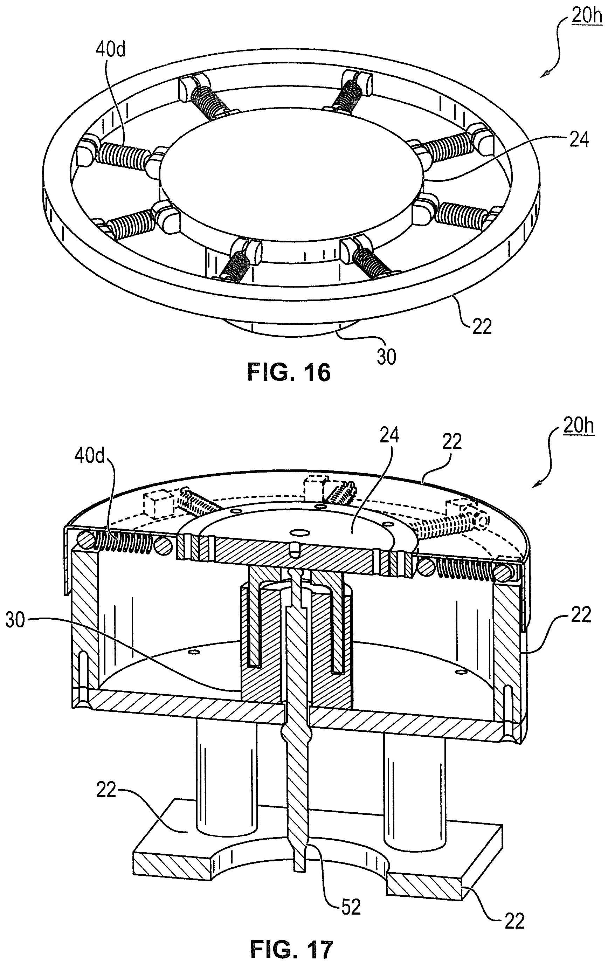

Die Figuren 16 und 17 zeigen eine achte Ausführungsform der Schweißanlagen-Positionier-Anordnung 20h. Im grundsätzlichen Aufbau ist diese Ausführungsform mit den vorher beschriebenen Ausführungsformen mit Zentrierspinne 54 vergleichbar. Anstelle der Zentrierspinne wird allerdings eine Vielzahl an Federn als elastisches Führungssystem 40d verwendet.

Figur 16 zeigt den ersten Abschnitt 22 in einer Ringform. Der zweite Abschnitt 24 ist kreisförmig dargestellt. Eine Vielzahl von Federn, in der gezeigten Ausführungsform acht Federn, die gleichmäßig beabstandet sind, verbinden die radiale Innenseite des ringförmigen ersten Abschnitts 22 mit der radialen Außenseite des kreisförmigen zweiten Abschnitts 24.

In Figur 17 ist ein möglicher Aufbau des ersten Abschnitts 22 für diese Ausführungsform der Schweißanlagen-Positionier-Anordnung 20h verdeutlicht. Der erste Abschnitt 22 weist einen Bodenbereich mit einem Loch auf, von dem sich beispielsweise vier Säulen erstrecken, von denen nur zwei aufgrund der Schnittdarstellung dargestellt sind. Am oberen Ende der Säulen ist ein kreisförmiger Boden angeordnet, von dem sich in axialer Richtung eine Zylinderform erstreckt. Vorzugsweise schließt ein oberes Ende der Zylinderform im Ausgangszustand erneut fluchtend mit dem zweiten Abschnitt 24 ab.

Mittig auf dem kreisförmigen Boden ist der Tauchspulenantrieb 30 angeordnet. Im Tauchspulenantrieb ist der Wegsensor 52 angeordnet, wobei ein Kabel des Wegsensors 52 beispielsweise durch das Loch im Bodenbereich des ersten Abschnitts 22 geführt ist.

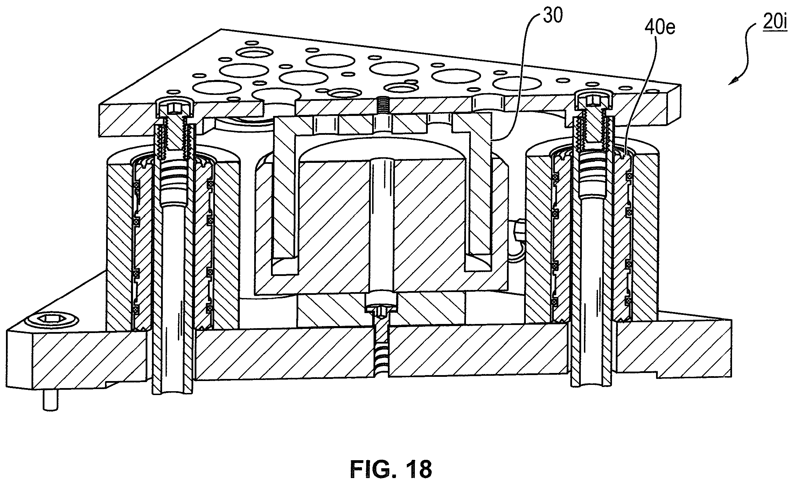

Eine neunte Ausführungsform der Schweißanlagen-Positionier-Anordnung 20i ist in Figur 18 gezeigt. In dieser Ausführungsform werden Luftführungen als elastisches Führungssystem 40e verwendet.

Nun Bezug nehmend auf Figur 19 ist eine Schweißanlage 10 dargestellt. Diese weist einen Hubtisch 12, ein Oberwerkzeug 14 sowie eine der oben beschriebenen Ausführungsformen der Schweißanlagen-Positionier-Anordnung 20a-20i auf dem Hubtisch 12 auf. Gemäß einer ersten Alternative ist der statische erste Abschnitt 22 der Schweißanlagen-Positionier-Anordnung 20a-i integraler Bestandteil des Hubtischs 12. Gemäß einer zweiten Alternative ist der statische erste Abschnitt 22 mit dem Hubtisch 12 verbunden.

Bei der Schweißanlage 10 selbst kann es sich um jede beliebige Schweißanlage 10 handeln, wie beispielsweise eine Ultraschall-Schweißanlage, eine Laser-Schweißanlage, eine Infrarot-Schweißanlage, eine Vibrations-Schweißanlage oder eine Reib-Schweißanlage.

Aufgrund des elastischen Führungssystems 40a-40e sind der erste und der zweite Abschnitt entlang nur einer Achse relativ zueinander bewegbar. Bei dieser Achse handelt es sich vorzugsweise um eine vertikale Achse, bezogen auf einen Boden, auf dem die Schweißanlage 10 steht. Im Betrieb werden die zu verschweißenden Bauteile zwischen dem Oberwerkzeug 14 und dem zweiten Abschnitt 24 der Schweißanlagen-Positionier-Anordnung 20a-20i mit der gewünschten Kraft eingeklemmt.

Eine Kraft, mit der die miteinander zu verschweißenden Bauteile mittels der Schweißanlage 10 einklemmbar sind, ist ≤ 1 kN, vorzugsweise ≤ 500 N und besonders bevorzugt ≤ 250 N. Gerade bei filigranen Bauteilen sind noch geringere Kräfte erforderlich, wobei mit der Schweißanlage 10 auch Bereiche ≤ 20 N, vorzugsweise ≤ 10 N und insbesondere ≤ 5 N realisierbar sind.

Aufgrund des spezifischen Aufbaus der verwendeten Schweißanlagen-Positionier-Anordnung 20a-i weicht eine Ist-Kraft, mit der die miteinander zu verschweißenden Bauteile im Betrieb eingeklemmt werden, von einer vorgegebenen Soll-Kraft um höchstens 2,5 N, bevorzugt um höchstens 1 N und besonders bevorzugt um höchstens 0,5 N ab. Gleiches gilt für eine Abweichung des Ist-Wegs vom vorgegebenen Soll-Weg. So weicht der Ist-Weg, um den die axiale Länge der Schweißanlagen-Positionier-Anordnung 20a-i im Betrieb von einem Ursprungspunkt geändert wird, von einem vorgegebenen Soll-Weg um höchstens 1 mm, bevorzugt höchstens 0,1 mm und besonders bevorzugt um höchstens 0,01 mm ab. Da mittels der Schweißanlagen-Positionier-Anordnung 20a-i eine hohe Reproduzierbarkeit der Schweißungen erzielbar ist, wird die maximale Abweichung für die Kraft und/oder den Weg bei mindestens 3, vorzugsweise mindestens 5 und besonders bevorzugt mindestens 10, aufeinanderfolgenden Schweißprozessen eingehalten.

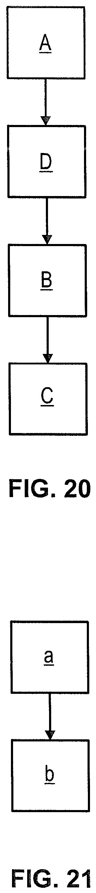

Nun Bezug nehmend auf Figur 20 ist ein Flussdiagramm einer Ausführungsform eines erfindungsgemäßen Schweißverfahrens zum Verbinden eines ersten Bauteils mit einem zweiten Bauteil unter Verwendung der erfindungsgemäßen Schweißanlage 10 dargestellt. Im Ausgangszustand befinden sich die beiden Abschnitte der Schweißanlagen-Positionier-Anordnung beispielsweise in einem minimalen Abstand zueinander. Vorzugsweise weist die Schweißanlage zudem einen Hubtisch auf, der sich anfänglich ebenfalls in einem Ausgangszustand befindet, d.h. vorzugsweise in einem größtmöglichen Abstand vom Oberwerkzeug der Schweißanlage. Dieser Aufbau mit Hubtisch eignet sich insbesondere für eine manuelle Bestückung der Schweißanlage mit den zu verschweißenden Bauteilen oder bei zu verschweißenden Bauteilen, deren kombinierte Bauteilhöhe größer ist als eine maximale Längenänderung der Schweißanlagen-Positionier-Anordnung.

In einem ersten Schritt A erfolgt nun ein Anordnen des ersten Bauteils am bewegbaren zweiten Abschnitt der Schweißanlagen-Positionier-Anordnung und des zweiten Bauteils auf dem ersten Bauteil oder in einem Oberwerkzeug der Schweißanlage. Anschließend erfolgt in Schritt D ein Bewegen des Hubtischs in Richtung des Oberwerkzeugs der Schweißanlage vor dem Bewegen des zweiten Abschnitts relativ zum ersten Abschnitt, so dass zunächst ein gewünschter Abstand zwischen zweitem Abschnitt und Oberwerkzeug einstellbar ist. Alternativ oder zusätzlich kann ein Schritt vorgesehen werden, bei dem ein Bewegen des Oberwerkzeugs in Richtung der Schweißanlagen-Positionier-Anordnung vor dem Bewegen des zweiten Abschnitts relativ zum ersten Abschnitt erfolgt, so dass ein gewünschter Abstand zwischen zweitem Abschnitt und Oberwerkzeug einstellbar ist.

Daran schließt sich in Schritt B ein Bewegen des zweiten Abschnitts relativ zum ersten Abschnitt an. Diese Bewegung kann stufenlos oder in einem oder mehreren Schritten erfolgen. Auf diese Weise werden das erste und das zweite Bauteil unter Aufbringung einer Kraft von insbesondere ≤ 1 kN, vorzugsweise ≤ 500 N und besonders bevorzugt ≤ 250 N, zwischen dem Oberwerkzeug und dem zweiten Abschnitt eingeklemmt gehalten. Dabei ist es bevorzugt, dass eine Regelung der Kraft über einen Motorstrom des Antriebssystems erfolgt. Auf diese Weise ist kein eigener Kraftsensor erforderlich, da beispielsweise die Kraftregelung über einen Motorstrom für den Tauchspulenantrieb o.ä. erfolgt. Dieser Aufbau eignet sich daher insbesondere für Antriebssysteme, deren Motorstrom sich proportional, insbesondere linear, zur aufgebrachten Kraft verhält.

Weiterhin ist es vorteilhaft, dass eine Ist-Kraft, mit der die miteinander zu verschweißenden Bauteile eingeklemmt werden, von einer vorgegebenen Soll-Kraft um höchstens 2,5 N, bevorzugt um höchstens 1 N und besonders bevorzugt um höchstens 0,5 N abweicht. Zusätzlich oder alternativ ist es bevorzugt, dass ein Ist-Weg, um den die axiale Länge der Schweißanlagen-Positionier-Anordnung von einem Ursprungspunkt geändert wird, von einem vorgegebenen Soll-Weg um höchstens 1 mm, bevorzugt um höchstens 0,1 mm und besonders bevorzugt um höchstens 0,01 mm abweicht. Hierdurch werden Kraftspitzen beim Kontakt der beiden Bauteile mit dem Oberwerkzeug und eine daraus möglicherweise resultierende Beschädigung oder Zerstörung der miteinander zu verschweißenden Bauteile vermieden.

Schließlich findet in Schritt C ein Verschweißen der beiden Bauteile miteinander statt. Danach können der Hubtisch und die Schweißanlagen-Positionier-Anordnung wieder in ihre ursprüngliche Position oder in eine zum Beladen geeignete Zwischenposition verfahren werden und das Verfahren wird wiederholt. Ebenso ist es bevorzugt, wenn das Oberwerkzeug in seine ursprüngliche Position oder in eine zum Beladen geeignete Zwischenposition verfahren wird. Dabei ist es bevorzugt, dass die oben genannte maximale Abweichung für die Kraft und/oder den Weg bei mindestens 3, vorzugsweise mindestens 5 und besonders bevorzugt mindestens 10, aufeinanderfolgenden Schweißprozessen eingehalten wird.

Nun Bezug nehmend auf Figur 21 ist ein Flussdiagramm einer Ausführungsform eines erfindungsgemäßen Nachrüstverfahrens für eine Schweißanlage, insbesondere einer Schweißanlage mit einem Hubtisch, mit einer erfindungsgemäßen Schweißanlagen-Positionier-Anordnung dargestellt.

In einem ersten Schritt a wird eine erfindungsgemäße Schweißanlagen-Positionier-Anordnung bereitgestellt. Dies kann durch die Bereitstellung eines Nachrüstsatz für eine Schweißanlage, insbesondere eine Schweißanlage mit Hubtisch, erfolgen. Der Nachrüstsatz umfasst dabei insbesondere eine erfindungsgemäße Schweißanlagen-Positionier-Anordnung.

In einem nachfolgenden zweiten Schritt b erfolgt ein Anbringen der Schweißanlagen-Positionier-Anordnung an der Schweißanlage, insbesondere am Hubtisch, derart, dass im Betrieb ein erstes und ein zweites Bauteil unter Aufbringung einer Kraft zwischen einem Oberwerkzeug der Schweißanlage und dem zweiten Abschnitt der Schweißanlagen-Positionier-Anordnung einklemmbar sind. Mit dem Nachrüstverfahren lassen sich somit bestehende Schweißanlagen mit der erfindungsgemäßen Schweißanlagen-Positionier-Anordnung nachrüsten.

### 6. Bezugszeichenliste

- 1: Schweißanlage (Stand der Technik)
- 3: Hubtisch
- 5: Oberwerkzeug

- 10: Schweißanlage
- 12: Hubtisch
- 14: Oberwerkzeug

- 20a-i: Schweißanlagen-Positionier-Anordnung
- 22: erster Abschnitt
- 24: zweiter Abschnitt

- 30: Tauchspulenantrieb
- 32: Befestigungsbereich für einen Kern des Tauchspulenantriebs 30
- 34: Verbindungsbereich für den zweiten Abschnitt 24

- 40a-d: elastisches Führungssystem
- 42: erste Platte
- 44: zweite Platte
- 46: Abstandselement
- 48: erstes Verbindungselement
- 50: zweites Verbindungselement
- 52: Wegsensor
- 54: Zentrierspinne

- s: Verstell-Weg der Hubtische 3 und 12

## Patentansprüche

1. Schweißanlagen-Positionier-Anordnung (20a-i) mit der bei Verwendung in einer Schweißanlage (10) ein erstes Bauteil gegen ein zweites Bauteil mit einer Kraft drückbar ist, wobei die Schweißanlagen-Positionier-Anordnung (20a-i) die folgenden Merkmale umfasst:
a. einen statischen ersten Abschnitt (22) und einen relativ zum statischen ersten Abschnitt (22) bewegbaren zweiten Abschnitt (24), wobei mit dem zweiten Abschnitt (24) im Betrieb das erste Bauteil gegen das zweite Bauteil drückbar ist,
b. mindestens ein Antriebssystem, das mit einem ersten Ende mit dem ersten Abschnitt (22) und mit einem zweiten Ende mit dem zweiten Abschnitt (24) verbunden ist, sowie
c. mindestens ein elastisches Führungssystem (40a-d) mittels dem der erste Abschnitt (22) und der zweite Abschnitt (24) miteinander verbunden sind, wobei
d. der erste Abschnitt (22) und der zweite Abschnitt (24) aufgrund des mindestens einen elastischen Führungssystems (40a-d) entlang nur einer Achse relativ zueinander bewegbar sind, so dass eine axiale Länge der Schweißanlagen-Positionier-Anordnung (20a-i) veränderbar ist, und
e1. das mindestens eine Antriebssystem umfasst einen Tauchspulenantrieb (30) oder
e2. das mindestens eine Antriebssystem umfasst einen Piezomotor, einen Linearmotor, ein elektromagnetisches Antriebssystem, ein Spulensystem oder einen Antrieb mit Feld- oder Erregerspule oder
e3. das mindestens eine Antriebssystem umfasst einen rotativen Motor, der mechanische Verluste aufweist, die geringer sind als eine Kraft, mit der im Betrieb das erste Bauteil gegen das zweite Bauteil drückbar ist, wobei die Kraft ≤ 1 kN, vorzugsweise ≤ 500 N und besonders bevorzugt ≤ 250 N ist.

2. Schweißanlagen-Positionier-Anordnung (20a-i) gemäß Patentanspruch 1, die mindestens drei Antriebssysteme aufweist.

3. Schweißanlagen-Positionier-Anordnung (20f-g) gemäß einem der vorhergehenden Patentansprüche, in der das mindestens eine Führungssystem (40c) mindestens eine Zentrierspinne (54) oder eine Vielzahl an Federn aufweist.

4. Schweißanlagen-Positionier-Anordnung (20a-e) gemäß einem der Patentansprüche 1 oder 2, in der das mindestens eine Führungssystem (40a-b) eine erste Platte (42) und eine zweite Platte (44) umfasst, wobei die erste Platte (42) und die zweite Platte (44) an einem ersten axialen Ende miteinander verbunden sind, insbesondere über ein Abstandselement (46), und die erste Platte (42) ist an einem zweiten axialen Ende mit dem ersten Abschnitt (22) verbunden, während die zweite Platte (44) an einem zweiten axialen Ende mit dem zweiten Abschnitt (24) verbunden ist.

5. Schweißanlagen-Positionier-Anordnung (20a-i) gemäß einem der vorhergehenden Patentansprüche, die mindestens zwei Führungssysteme (40a-d), vorzugsweise mindestens drei und besonders bevorzugt mindestens vier Führungssysteme (40a-d) aufweist.

6. Schweißanlagen-Positionier-Anordnung (20a-i) gemäß einem der vorhergehenden Patentansprüche, in der die axiale Länge der Schweißanlagen-Positionier-Anordnung (20a-i) in einem Bereich ≤ 200 mm, vorzugsweise ≤ 150 mm und besonders bevorzugt ≤ 140 mm veränderbar ist.

7. Schweißanlagen-Positionier-Anordnung (20a-i) gemäß einem der vorhergehenden Patentansprüche, bei der im Betrieb ein Ist-Weg, um den die axiale Länge der Schweißanlagen-Positionier-Anordnung (20a-i) von einem Ursprungspunkt geändert wird, von einem vorgegebenen Soll-Weg um höchstens 1 mm, bevorzugt um höchstens 0,1 mm und besonders bevorzugt um höchstens 0,01 mm abweicht.

8. Schweißanlagen-Positionier-Anordnung (20a-i) gemäß Patentanspruch 7, bei der die maximale Abweichung bei mindestens 3, vorzugsweise mindestens 5 und besonders bevorzugt mindestens 10, aufeinanderfolgenden Verfahrbewegungen eingehalten wird.

9. Schweißanlage (10) mit einer Schweißanlagen-Positionier-Anordnung (20a-i) gemäß einem der vorhergehenden Patentansprüche sowie einem Oberwerkzeug (14) und einer Steuereinheit, wobei der bewegbare zweite Abschnitt (24) der Schweißanlagen-Positionier-Anordnung (20a-i) mittels der Steuereinheit relativ zum Oberwerkzeug (14) so bewegbar ist, dass ein erstes und ein zweites miteinander zu verschweißendes Bauteil unter Aufbringung einer Kraft zwischen dem Oberwerkzeug (14) und dem bewegbaren zweiten Abschnitt (24) der Schweißanlagen-Positionier-Anordnung (20a-i) einklemmbar sind.

10. Schweißanlage (10) gemäß Patentanspruch 9, bei der die Kraft, mit der die miteinander zu verschweißenden Bauteile einklemmbar sind, ≤ 1 kN ist, vorzugsweise ≤ 500 N und besonders bevorzugt ≤ 250 N, und/oder
bei der die zu verschweißenden Bauteile mittels Ultraschallschweißen, Laserschweißen, Durchstrahlschweißen, Vibrationsschweißen oder Reibschweißen verschweißbar sind und/ oder
die weiterhin einen Hubtisch (12) aufweist, wobei der statische erste Abschnitt (22) der Schweißanlagen-Positionier-Anordnung (20a-i) integraler Bestandteil des Hubtischs (12) ist oder mit dem Hubtisch (12) verbunden ist.

11. Schweißanlage (10) gemäß einem der Patentansprüche 9 bis 10, bei der eine Ist-Kraft, mit der die miteinander zu verschweißenden Bauteile im Betrieb eingeklemmt werden, von einer vorgegebenen Soll-Kraft um höchstens 2,5 N, bevorzugt um höchstens 1 N und besonders bevorzugt um höchstens 0,5 N abweicht, und/oder
bei der ein Ist-Weg, um den die axiale Länge der Schweißanlagen-Positionier-Anordnung (20a-i) im Betrieb von einem Ursprungspunkt geändert wird, von einem vorgegebenen Soll-Weg um höchstens 1 mm, bevorzugt höchstens 0,1 mm und besonders bevorzugt um höchstens 0,01 mm abweicht.

12. Schweißanlage (10) gemäß Patentanspruch 11, bei der die maximale Abweichung bei mindestens 3, vorzugsweise mindestens 5 und besonders bevorzugt mindestens 10, aufeinanderfolgenden Schweißprozessen eingehalten wird.

13. Schweißverfahren zum Verbinden eines ersten Bauteils mit einem zweiten Bauteil unter Verwendung einer Schweißanlage (10) gemäß einem der Patentansprüche 9 bis 12, wobei das Schweißverfahren die Schritte umfasst:
a. Anordnen des ersten Bauteils am bewegbaren zweiten Abschnitt (24) der Schweißanlagen-Positionier-Anordnung (20a-i) und des zweiten Bauteils auf dem ersten Bauteil oder in einem Oberwerkzeug (14) der Schweißanlage (10),
b. Bewegen des zweiten Abschnitts (24) relativ zum ersten Abschnitt (22) so, dass das erste und das zweite Bauteil unter Aufbringung einer Kraft von insbesondere ≤ 1 kN, vorzugsweise ≤ 500 N und besonders bevorzugt ≤ 250 N, zwischen dem Oberwerkzeug (14) und dem zweiten Abschnitt (24) eingeklemmt gehalten werden, sowie
c. Verschweißen der beiden Bauteile miteinander.

14. Schweißverfahren gemäß Patentanspruch 13, das den weiteren Schritt aufweist:
d. Bewegen des Oberwerkzeugs (14) in Richtung der Schweißanlagen-Positionier-Anordnung (20a-i) vor dem Bewegen des zweiten Abschnitts (24) relativ zum ersten Abschnitt (22), so dass zunächst ein gewünschter Abstand zwischen zweitem Abschnitt (24) und Oberwerkzeug (14) einstellbar ist,
und/oder wobei die Schweißanlage (10) einen Hubtisch (12) aufweist und das Schweißverfahren den weiteren Schritt umfasst:
e. Bewegen des Hubtischs (12) in Richtung des Oberwerkzeugs (14) der Schweißanlage (10) vor dem Bewegen des zweiten Abschnitts (24) relativ zum ersten Abschnitt (22), so dass zunächst ein gewünschter Abstand zwischen zweitem Abschnitt (24) und Oberwerkzeug (14) einstellbar ist.

15. Schweißverfahren gemäß einem der Patentansprüche 13 oder 14, bei dem eine Regelung der Kraft über einen Motorstrom des Antriebssystems erfolgt.

16. Schweißverfahren gemäß einem der Patentansprüche 13 bis 15, bei dem eine Ist-Kraft, mit der die miteinander zu verschweißenden Bauteile eingeklemmt werden, von einer vorgegebenen Soll-Kraft um höchstens 2,5 N, bevorzugt um höchstens 1 N und besonders bevorzugt um höchstens 0,5 N abweicht, und/oder
bei dem ein Ist-Weg, um den die axiale Länge der Schweißanlagen-Positionier-Anordnung (20a-i) von einem Ursprungspunkt geändert wird, von einem vorgegebenen Soll-Weg um höchstens 1 mm, bevorzugt um höchstens 0,1 mm und besonders bevorzugt um höchstens 0,01 mm abweicht.

17. Schweißverfahren gemäß Patentanspruch 16, bei der die maximale Abweichung bei mindestens 3, vorzugsweise mindestens 5 und besonders bevorzugt mindestens 10, aufeinanderfolgenden Schweißprozessen eingehalten wird.

18. Nachrüstsatz für eine Schweißanlage (1), insbesondere eine Schweißanlage (1) mit Hubtisch (3), der eine Schweißanlagen-Positionier-Anordnung (20a-i) gemäß einem der Patentansprüche 1 bis 8 umfasst.

19. Nachrüstverfahren für eine Schweißanlage (1), insbesondere einer Schweißanlage (1) mit einem Hubtisch (3), mit einer Schweißanlagen-Positionier-Anordnung (20a-i) gemäß einem der Patentansprüche 1 bis 8, das die Schritte umfasst:
a. Bereitstellen einer Schweißanlagen-Positionier-Anordnung (20a-i) gemäß einem der Patentansprüche 1 bis 8 und
b. Anbringen der Schweißanlagen-Positionier-Anordnung (20a-i) an der Schweißanlage (1), insbesondere am Hubtisch (3), derart, dass im Betrieb ein erstes und ein zweites Bauteil unter Aufbringung einer Kraft zwischen einem Oberwerkzeug (5) der Schweißanlage (1) und dem zweiten Abschnitt (24) der Schweißanlagen-Positionier-Anordnung (20a-i) einklemmbar sind.

## Claims

1. Welding device positioning arrangement (20a-i) with which, when used in a welding device (10), a first component is pressable against a second component with a force, wherein the welding device positioning arrangement (20a-i) comprises the following features:
a. a static first section (22) and a second section (24) movable relative to the static first section (22), wherein in operation the first component is pressable against the second component by the second section (24),
b. at least one drive system connected at a first end to the first section (22) and at a second end to the second section (24), and
c. at least one elastic guiding system (40a-d) by means of which the first section (22) and the second section (24) are connected to each other, wherein
d. the first section (22) and the second section (24) are movable relative to each other along only one axis due to the at least one elastic guiding system (40a-d), so that an axial length of the welding device positioning arrangement (20a-i) is variable, and
e1. the at least one drive system comprises a moving coil drive (30) or
e2. the at least one drive system comprises a piezo motor, a linear motor, an electromagnetic drive system, a coil system or a drive with field or excitation coil, or
e3. the at least one drive system comprises a rotatory motor which comprises mechanical losses which are less than a force with which, in operation, the first component is pressable against the second component, wherein the force is ≤ 1 kN, preferably ≤ 500 N and particularly preferred ≤ 250 N.

2. Welding device positioning arrangement (20a-i) according to claim 1, which comprises at least three drive systems.

3. Welding device positioning arrangement (20f-g) according to one of the preceding claims, in which the at least one guiding system (40c) comprises at least one centering spider (54) or a plurality of springs.

4. Welding device positioning arrangement (20a-e) according to one of the claims 1 or 2, in which the at least one guiding system (40a-b) comprises a first plate (42) and a second plate (44), wherein the first plate (42) and the second plate (44) are connected to each other at a first axial end, in particular via a distance element (46), and the first plate (42) is connected to the first section (22) at a second axial end, while the second plate (44) is connected to the second section (24) at a second axial end.

5. Welding device positioning arrangement (20a-i) according to one of the preceding claims, which comprises at least two guiding systems (40a-d), preferably at least three and further preferred at least four guiding systems (40a-d).

6. Welding device positioning arrangement (20a-i) according to one of the preceding claims, in which the axial length of the welding device positioning arrangement (20a-i) is changeable in a range of ≤ 200 mm, preferably ≤ 150 mm and particularly preferred ≤ 140 mm.

7. Welding device positioning arrangement (20a-i) according to one of the preceding claims in which, in operation, an actual displacement, by which the axial length of the welding device positioning arrangement (20a-i) is changed from a point of origin, deviates from a predetermined nominal path by a maximum of 1 mm, preferably by a maximum of 0.1 mm and particularly preferred by a maximum of 0.01 mm.

8. Welding device positioning arrangement (20a-i) according to claim 7, with which the maximum deviation is maintained for at least 3, preferably at least 5 and particularly preferred at least 10, consecutive travelling movements.

9. Welding device (10) with a welding device positioning arrangement (20a-i) according to one of the preceding claims as well as an upper tool (14) and a control unit, wherein the movable second section (24) of the welding device positioning arrangement (20a-i) is movable relative to the upper tool (14) by means of the control unit so that a first and a second component to be welded together are clampable between the upper tool (14) and the movable second section (24) of the welding device positioning arrangement (20a-i) by applying a force.

10. Welding device (10) according to claim 9, wherein the force with which the components to be welded together are clampable, is ≤ 1 kN, preferably ≤ 500 N and particularly preferred ≤ 250 N, and/or
wherein the components to be welded are weldable by means of ultrasonic welding, laser welding, transmission welding, vibration welding or friction welding and/or
further comprising a lifting table (12), wherein the static first section (22) of the welding device positioning arrangement (20a-i) is an integral part of the lifting table (12) or is connected to the lifting table (12).

11. Welding device (10) according to one of the claims 9 to 10, in which an actual force, with which the components to be welded together are clamped during operation, deviates from a predetermined nominal force by a maximum of 2.5 N, preferably by a maximum of 1 N and particularly preferred by a maximum of 0.5 N and/or
in which an actual path, by which the axial length of the welding device positioning arrangement (20a-i) is changed from a point of origin during operation deviates from a predetermined nominal path by a maximum of 1 mm, preferably by a maximum of 0.1 mm and particularly preferred by a maximum of 0.01 mm.

12. Welding device (10) according to claim 11, in which the maximum deviation is maintained for at least 3, preferably at least 5 and particularly preferred at least 10 consecutive welding processes.

13. Welding method for connecting a first component to a second component using a welding device (10) according to one of claims 9 to 12, wherein the welding method comprises the steps:
a. arranging the first component on the movable second section (24) of the welding device positioning arrangement (20a-i) and arranging the second component on the first component or in an upper tool (14) of the welding device (10),
b. moving the second section (24) relative to the first section (22) such that the first and the second component are held clamped between the upper tool (14) and the second section (24) by applying a force, in particular ≤ 1 kN, preferably ≤ 500 N and particularly preferred ≤ 250 N, and
c. welding the two components together.

14. Welding method according to claim 13, which comprises the further step:
d. moving the upper tool (14) in the direction of the welding device positioning arrangement (20a-i) before moving the second section (24) relative to the first section (22) so that firstly, a desired distance between the second section (24) and the upper tool (14) is settable,
and/or wherein the welding device (10) comprises a lifting table (12) and the welding method comprises the further step:
e. moving the lifting table (12) in the direction of the upper tool (14) of the welding device (10) before moving the second section (24) relative to the first section (22), so that firstly, a desired distance between the second section (24) and the upper tool (14) is settable.

15. Welding method according to one of the claims 13 or 14, in which a regulation of the force takes place by a motor current of the drive system.

16. Welding method according to one of the claims 13 to 15, in which an actual force, with which the components to be welded together are clamped, deviates from a predetermined nominal force by a maximum of 2.5 N, preferably by a maximum of 1 N and particularly preferred by a maximum of 0.5 N, and/or
in which an actual path by which the axial length of the welding device positioning arrangement (20a-i) is changed from a point of origin deviates from a predetermined nominal path by a maximum of 1 mm, preferably by a maximum of 0.1 mm and particularly preferred by a maximum of 0.01 mm.

17. Welding method according to claim 16, in which the maximum difference is maintained for at least 3, preferably at least 5 and particularly preferred at least 10 consecutive welding processes.

18. Retrofit kit for a welding device (1), in particular a welding device (1) with a lifting table (3), comprising a welding device positioning arrangement (20a-i) according to one of the claims 1 to 8.

19. Retrofitting method for a welding device (1), in particular a welding device (1) with a lifting table (3), with a welding device positioning arrangement (20a-i) according to one of the claims 1 to 8, which comprises the steps:
a. providing a welding device positioning arrangement (20a-i) according to one of the claims 1 to 8 and
b. attaching the welding device positioning arrangement (20a-i) to the welding device, in particular to the lifting table (3), so that during operation, a first and a second component are clampable between an upper tool (5) of the welding device (1) and the second section (24) of the welding device positioning arrangement (20a-i) by applying a force.

## Revendications

1. Dispositif de positionnement d'installation de soudage (20a-i) permettant de presser un premier composant contre un deuxième composant au moyen d'une force lors de l'utilisation dans une installation de soudage (10), le dispositif de positionnement d'installation de soudage (20a-i) comportant les caractéristiques suivantes :
a. une première section statique (22) et une deuxième section (24) déplaçable par rapport à la première section statique (22), la deuxième section (24) permettant de presser le premier composant contre le deuxième composant pendant le fonctionnement,
b. au moins un système d'entraînement relié par une première extrémité à la première section (22) et par une deuxième extrémité à la deuxième section (24), et
c. au moins un système de guidage élastique (40a-d) au moyen duquel la première section (22) et la deuxième section (24) sont reliées entre elles, dans lequel
d. du fait de l'au moins un système de guidage élastique (40a-d), la première section (22) et la deuxième section (24) sont déplaçables l'une par rapport à l'autre le long d'un seul axe, de sorte qu'une longueur axiale du dispositif de positionnement d'installation de soudage (20a-i) est modifiable, et
e1. l'au moins un système d'entraînement comporte un entraînement à bobine mobile (30) ou
e2. l'au moins un système d'entraînement comporte un moteur piézoélectrique, un moteur linéaire, un système d'entraînement électromagnétique, un système à bobine ou un entraînement à bobine de champ ou d'excitation ou
e3. l'au moins un système d'entraînement comporte un moteur rotatif présentant des pertes mécaniques inférieures à une force permettant de presser le premier composant contre le deuxième composant pendant le fonctionnement, la force étant ≤ 1 kN, de préférence ≤ 500 N et de façon particulièrement préférée ≤ 250 N.

2. Dispositif de positionnement d'installation de soudage (20a-i) selon la revendication 1, présentant au moins trois systèmes d'entraînement.

3. Dispositif de positionnement d'installation de soudage (20f-g) selon l'une des revendications précédentes, dans lequel l'au moins un système de guidage (40c) présente au moins une araignée de centrage (54) ou une pluralité de ressorts.

4. Dispositif de positionnement d'installation de soudage (20a-e) selon l'une des revendications 1 ou 2, dans lequel l'au moins un système de guidage (40a-b) comporte une première plaque (42) et une deuxième plaque (44), la première plaque (42) et la deuxième plaque (44) étant reliées entre elles à une première extrémité axiale, en particulier par le biais d'un élément d'espacement (46), et la première plaque (42) étant reliée à la première section (22) à une deuxième extrémité axiale, tandis que la deuxième plaque (44) est reliée à la deuxième section (24) à une deuxième extrémité axiale.

5. Dispositif de positionnement d'installation de soudage (20a-i) selon l'une des revendications précédentes, présentant au moins deux systèmes de guidage (40a-d), de préférence au moins trois et de façon particulièrement préférée au moins quatre systèmes de guidage (40a-d).

6. Dispositif de positionnement d'installation de soudage (20a-i) selon l'une des revendications précédentes, dans lequel la longueur axiale du dispositif de positionnement d'installation de soudage (20a-i) est modifiable dans une plage ≤ 200 mm, de préférence ≤ 150 mm et de façon particulièrement préférée ≤ 140 mm.

7. Dispositif de positionnement d'installation de soudage (20a-i) selon l'une des revendications précédentes, dans lequel, pendant le fonctionnement, une course réelle selon laquelle la longueur axiale du dispositif de positionnement d'installation de soudage (20a-i) est modifiée à partir d'un point d'origine, s'écarte au maximum de 1 mm, de préférence au maximum de 0,1 mm et de façon particulièrement préférée au maximum de 0,01 mm par rapport à une course théorique prédéfinie.

8. Dispositif de positionnement d'installation de soudage (20a-i) selon la revendication 7, dans lequel l'écart maximal est respecté lors d'au moins 3, de préférence au moins 5 et de façon particulièrement préférée au moins 10 déplacements consécutifs.

9. Installation de soudage (10) comprenant un dispositif de positionnement d'installation de soudage (20a-i) selon l'une des revendications précédentes, ainsi qu'un outil supérieur (14) et une unité de commande, la deuxième section déplaçable (24) du dispositif de positionnement d'installation de soudage (20a-i) pouvant être déplacée de telle façon par rapport à l'outil supérieur (14), au moyen de l'unité de commande, qu'un premier et un deuxième composant à souder entre eux peuvent être serrés entre l'outil supérieur (14) et la deuxième section déplaçable (24) du dispositif de positionnement d'installation de soudage (20a-i) par application d'une force.

10. Installation de soudage (10) selon la revendication 9, dans laquelle la force permettant de serrer les composants à souder entre eux est ≤ 1 kN, de préférence ≤ 500 N et de façon particulièrement préférée ≤ 250 N, et/ou
dans laquelle les composants à souder peuvent être soudés au moyen d'un soudage ultrasonore, d'un soudage laser, d'un soudage par pénétration, d'un soudage par vibration ou d'un soudage par friction, et/ou
présentant en outre une table élévatrice (12), la première section statique (22) du dispositif de positionnement d'installation de soudage (20a-i) faisant partie intégrante de la table élévatrice (12) ou étant reliée à la table élévatrice (12).

11. Installation de soudage (10) selon l'une des revendications 9 à 10, dans laquelle une force réelle permettant de serrer les composants à souder entre eux pendant le fonctionnement s'écarte au maximum de 2,5 N, de préférence au maximum de 1 N et de façon particulièrement préférée au maximum de 0,5 N par rapport à une force théorique prédéfinie, et/ou
dans laquelle une course réelle, selon laquelle la longueur axiale du dispositif de positionnement d'installation de soudage (20a-i) est modifiée à partir d'un point d'origine pendant le fonctionnement, s'écarte au maximum de 1 mm, de préférence au maximum de 0,1 mm et de façon particulièrement préférée au maximum de 0,01 mm par rapport à une course théorique prédéfinie.

12. Installation de soudage (10) selon la revendication 11, dans laquelle l'écart maximal est respecté lors d'au moins 3, de préférence au moins 5 et de façon particulièrement préférée au moins 10 processus de soudage consécutifs.

13. Procédé de soudage destiné à relier un premier composant à un deuxième composant à l'aide d'une installation de soudage (10) selon l'une des revendications 9 à 12, le procédé de soudage comportant les étapes suivantes :
a. agencement du premier composant sur la deuxième section déplaçable (24) du dispositif de positionnement d'installation de soudage (20a-i), et du deuxième composant sur le premier composant ou dans un outil supérieur (14) de l'installation de soudage (10),
b. déplacement de la deuxième section (24) par rapport à la première section (22), de telle façon que le premier et le deuxième composant sont maintenus serrés entre l'outil supérieur (14) et la deuxième section (24) par application d'une force, notamment ≤ 1 kN, de préférence ≤ 500 N et de façon particulièrement préférée ≤ 250 N, et
c. soudage des deux composants entre eux.

14. Procédé de soudage selon la revendication 13, présentant l'étape supplémentaire suivante :
d. déplacement de l'outil supérieur (14) vers le dispositif de positionnement d'installation de soudage (20a-i) avant le déplacement de la deuxième section (24) par rapport à la première section (22), de telle façon qu'un écart souhaité entre la deuxième section (24) et l'outil supérieur (14) peut être réglé préalablement,
et/ou dans lequel l'installation de soudage (10) présente une table élévatrice (12) et le procédé de soudage comporte l'étape supplémentaire suivante :
e. déplacement de la table élévatrice (12) vers l'outil supérieur (14) de l'installation de soudage (10) avant le déplacement de la deuxième section (24) par rapport à la première section (22), de telle façon qu'un écart souhaité entre la deuxième section (24) et l'outil supérieur (14) peut être réglé préalablement.

15. Procédé de soudage selon l'une des revendications 13 ou 14, dans lequel une régulation de la force est effectuée au moyen d'un courant moteur du système d'entraînement.

16. Procédé de soudage selon l'une des revendications 13 à 15, dans lequel une force réelle permettant de serrer les composants à souder entre eux s'écarte au maximum de 2,5 N, de préférence au maximum de 1 N et de façon particulièrement préférée au maximum de 0,5 N par rapport à une force théorique prédéfinie, et/ou
dans lequel une course réelle, selon laquelle la longueur axiale du dispositif de positionnement d'installation de soudage (20a-i) est modifiée à partir d'un point d'origine, s'écarte au maximum de 1 mm, de préférence au maximum de 0,1 mm et de façon particulièrement préférée au maximum de 0,01 mm par rapport à une course théorique prédéfinie.

17. Procédé de soudage selon la revendication 16, dans lequel l'écart maximal est respecté lors d'au moins 3, de préférence au moins 5 et de façon particulièrement préférée au moins 10 processus de soudage consécutifs.

18. Kit d'adaptation destiné à une installation de soudage (1), en particulier une installation de soudage (1) avec table élévatrice (3) comportant un dispositif de positionnement d'installation de soudage (20a-i) selon l'une des revendications 1 à 8.

19. Procédé d'adaptation destiné à une installation de soudage (1), en particulier à une installation de soudage (1) avec une table élévatrice (3) comportant un dispositif de positionnement d'installation de soudage (20a-i) selon l'une des revendications 1 à 8, comportant les étapes suivantes :
a. mise à disposition d'un dispositif de positionnement d'installation de soudage (20a-i) selon l'une des revendications 1 à 8 et
b. montage du dispositif de positionnement d'installation de soudage (20a-i) sur l'installation de soudage (1), en particulier sur la table élévatrice (3), de telle façon que pendant le fonctionnement, un premier et un deuxième composant peuvent être serrés, par application d'une force, entre un outil supérieur (5) de l'installation de soudage (1) et la deuxième section (24) du dispositif de positionnement d'installation de soudage (20a-i).
